(19) **Europäisches Patentamt / European Patent Office / Office européen des brevets**

(11) **EP 1 868 156 A1**

(12) **EUROPEAN PATENT APPLICATION**
published in accordance with Art. 158(3) EPC

(43) Date of publication:
**19.12.2007 Bulletin 2007/51**

(51) Int Cl.:
**G06Q 40/00** (2006.01)

(21) Application number: **06728730.0**

(22) Date of filing: **07.03.2006**

(86) International application number:
**PCT/JP2006/304411**

(87) International publication number:
**WO 2006/095747 (14.09.2006 Gazette 2006/37)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **07.03.2005 JP 2005063169**
**17.08.2005 US 205219**

(71) Applicants:
- **Intellectual Property Bank Corp.**
  **Tokyo 105-0001 (JP)**
- **Masuyama, Hiroaki**
  **Toyonaka-shi,**
  **Osaka 560-0054 (JP)**

(72) Inventors:
- **MIYAMOTO, Kaoru**
  **Toshima-ku Tokyo, 1710051 (JP)**

- **ASADA, Makoto**
  **c/o Intellectual Property Bank Corp.**
  **Minato-ku Tokyo, 1050001 (JP)**
- **HOTTA, Hideaki**
  **c/o Intellectual Property Bank Corp.**
  **Minato-ku Tokyo, 1050001 (JP)**
- **HASUKO, Kazumi**
  **c/o Intellectual Property Bank Corp.**
  **Minato-ku Tokyo, 1050001 (JP)**
- **MASUYAMA, Hiroaki**
  **Osaka, 5600054 (JP)**

(74) Representative: **Style, Kelda Camilla Karen**
**Page White & Farrer**
**Bedford House**
**John Street**
**London, WC1N 2BF (GB)**

(54) **THEORETICAL STOCK PRICE COMPUTING DEVICE, THEORETICAL STOCK PRICE COMPUTING METHOD, AND THEORETICAL STOCK PRICE COMPUTING PROGRAM**

(57) [PROBLEMS] A theoretical stock price computing device and so forth for automatically computing an objective theoretical stock price based on the result obtained by synthetically evaluating a company according to company evaluation indexes including intellectual property related indexes are provided. [MEANS FOR SOLVING PROBLEMS] A theoretical stock price computing device obtains data on company evaluation indexes including intellectual property related indexes (S1), conducts a factor analysis and a multiple linear regression analysis on the data related to company evaluation indexes, computes the theoretical value of the after-tax business profit according to the results of the analyses (S13), computes the invested capital cost (S15), computes the theoretical value of the economic profit by deducting the invested capital cost from the theoretical value of the after-tax business profit (S17), computes the discount rate (S19), computes the theoretical market added value by dividing the theoretical value of the economic profit by the discount rate (S21), computes the equity capital of the company (S23), computes the estimated aggregate market value by adding the equity capital and the theoretical market added value (S25), and computes the theoretical stock price by dividing the estimated aggregate market value by the total number of stock issued (S27).

FIG. 3

Printed by Jouve, 75001 PARIS (FR)

**Description**

BACKGROUND OF THE INVENTION

1. Field of the Invention

The present invention relates to a theoretical stock price computing device, theoretical stock price computing method, and theoretical stock price computing program for calculating the theoretical stock price of companies based on a corporate valuation index.

2. Description of the Related Art

The market stock price is determined through buying and selling by investors at a stock exchange. Normally, based on their expectations of stock price performance, investors will buy a stock if they deem the stock price will rise, and, conversely, sell the stock if they deem it will fall. Further, there is increasing demand to use the theoretical stock price as an index for determining whether the current stock exchange stock price of a company being considered for investment is over priced or under priced in view of future expectations. The theoretical stock price it obtained by estimating the future expected earnings of a company and then taking the aggregate total of current value calculated by discounting the expected earnings by the shareholder capital cost as the estimated aggregate market value and then dividing this by the total number of outstanding shares.
Therefore, to calculate the theoretical stock price it is important for the value of the company to be correctly valuated. In this case, earnings per share (EPS) is often scrutinized by investment-related industries as a standard for assessing company value, for example. Other items often used as decision-making factors include quarterly earnings, rate of increase in earnings per share, and price book-value ratio (PBR). Further, focusing on this point, a method for calculating the theoretical stock price from the movement in the earnings per share (EPS) has been proposed (For example, refer to Non-Patent Reference 1). ,
[0004]   In addition, in stock exchanges the company valuation is performed based on the long-term earnings trend, and the stock price is determined based on the expectations estimated based on the company valuation. Focusing on this point, a method for calculating the theoretical stock price from the company valuation trend composed of the income value calculated based on the company's current income level and the growth potential premium calculated based on the future expected income growth level has been proposed (For example, refer to Non-Patent Reference 2).
[Non-Patent Reference 1] Masayuki Mikami, "Weekly Toyo Keizai" TOYO KEIZAI INC., March 13, 2004, pp.88-94.
[Non-Patent Reference 2] "Weekly Diamond" DIAMOND, Inc., August 2, 2003, pp. 37-53.

SUMMARY OF THE INVENTION

The method relating to the above-mentioned Non-Patent Reference 1 takes the book-value per share (BPS) at the end of the previous period as the current value and the aggregate total of the current value with the expected excess profit for each period discounted as the future value and calculates the theoretical stock price from the trends of these two indexes. Here, the expected excess profit is the value derived by subtracting the minimum earnings amount required of the company by shareholders from the earnings per share (EPS) forecast for each period. The minimum earnings amount required of the company by shareholders is calculated by multiplying the initial book-value per share (BPS) for each period by the shareholder capital cost.
The other method relating to Non-Patent Reference 2 takes the aggregate total of the current value derived by discounting the future expected earnings of after-tax operating profit by the capital cost as the income value, and the value obtained by subtracting the above-mentioned income value from the company value consisting of the sum of the interest-bearing debt and the aggregate market value as the growth potential premium and then calculates the theoretical stock price from the trends of these two indexes.
Nevertheless, today, the earnings and corporate value of companies are determined depending largely on the off-balance intangible assets such as technology, research and development, and brands. Notwithstanding this however, even the methods relating to the above-mentioned Non-Patent References 1 and 2 calculate the theoretical stock price using only data obtained from company financial statements as variables and do not take into consideration the affect on future company earnings of intellectual assets, such as patents, which are becoming increasingly important in the conduct of company activities. As a result, the methods of the above-mentioned Non-Patent References 1 and 2 evaluate the on-balance assets shown in the financial statements and other documents but are unable to calculate a company's future expected earnings by also correctly evaluating the off-balance intangible assets represented by intellectual assets such as patents. Therefore, in regards to the calculated theoretical stock price, the company value cannot be said to be evaluated accurately; making it difficult to use this index as a standard for determining whether the market stock price is over priced or under priced.

This presents the problem that investors and others are forced to valuate companies and trade shares by looking at only short-term income indexes calculated based on the currently available financial statements and recent incidental events and incidents, while on the other hand, the company management, which faces pressure from the stock market, must decide whether to leave impotently the stock price affected by the short-term income indexes or to give priority to the short-term income indexes and destroy company value through inadvisable restructuring of the technology and human resources accumulated over many years.

Further, if a company possesses intellectual assets, such as extremely competitive technology and know-how, but the state where this value is not at all reflected in the stock price continues, there is the danger that such a company could become an easy target of a buyout after corporate buyouts through a share exchange are completely liberalized. Therefore, a management strategy aimed at increasing company value based on stock price policies is a required issue for today's company management. For this reason too, management seeks information for determining whether the current stock price in the stock market of its company is over priced or under priced, so there is a high demand to use the theoretical stock price as an index for making such judgments.

Thus, an object of the present invention is to use the indexes obtained from patents and other intellectual assets representing off-balance intangible assets and further add data obtained from information concerning the management and finance of companies to comprehensively valuates how the respective companies are creating and operating the trinity management strategy consisting of business strategy, research and development strategy, and intellectual property strategy so as to increase the corporate value and to provide a theoretical stock price computing device, stock price computing method, and stock price computing program that can correctly calculate the future expected earnings based on these results and then automatically calculated the theoretical stock price.

In order to achieve the foregoing object, the present invention comprising the following constitution. Incidentally, definition of the terms used for explaining the invention claimed in any of the claims shall be applicable to the invention pertaining to the other claims to the extent possible according to its nature.

(Characteristic of the present invention according to Claim 1)

A theoretical stock price computing device according to Claim 1 of the present invention is a device that calculates the theoretical stock price of a company based on company valuation indexes, comprising;
data acquisition means that acquires data concerning company valuation indexes including intellectual assets related indexes;
expected earnings calculation means that calculates the expected earnings of a company using data concerning company valuation indexes including the intellectual assets related indexes;
discount rate calculation means that calculates the discount rate for deriving company present value using data concerning the company valuation indexes;
estimated aggregate market value calculation means that calculates the estimated aggregate market value of a company by dividing the expected earnings by the discount rate; and
theoretical stock price calculation means that calculates the theoretical stock price by dividing the estimated aggregate market value by the total number of outstanding shares.

The theoretical stock price computing device according to Claim 1 evaluates the comprehensive value of a company using information concerning the off-balance intangible assets based on patents and other intellectual assets as well as information concerning the on-balance (balance sheet) management and finances so as to calculate the expected earnings of the company. This makes it possible to assess the future earning power of a company by removing as far as possible actual stock price distortions resulting from arbitrary market trends, etc., that are unrelated to the intrinsic asset value of a company. This makes it possible to calculate a theoretical stock price that more closely matches the actual state of a company.

(Characteristic of the present invention according to Claim 2)

A theoretical stock price computing device according to Claim 2 of the present invention is a device that calculates the theoretical stock price of a company based on company valuation indexes, comprising;
data acquisition means that acquires data concerning company evaluation indexes including intellectual assets related indexes;
after-tax business income theoretical value calculation means that calculates the after-tax business income theoretical value of a company using data concerning company valuation indexes including the intellectual assets related indexes;
investment capital cost calculation means that calculates the investment capital cost of a company using data concerning the company valuation indexes;
economic profit theoretical value calculation means that calculates the economic profit theoretical value by subtracting the investment capital cost from the after-tax business income theoretical value;
discount rate calculation means that calculates the discount rate to derive the current value of a company using data concerning the company valuation indexes;
theoretical market value added calculation means that calculates the theoretical market value added by dividing the economic profit theoretical value by the discount rate;
equity capital calculation means that calculates the equity capital of a company using data concerning the company valuation indexes;
estimated aggregate market value calculation means that calculates the estimated aggregate market value of a company by adding the theoretical market value added to the equity capital; and
theoretical stock price calculation means that calculates the theoretical stock price by dividing the estimated aggregate market value by the total number of outstanding shares.

According to the theoretical stock price computing device of Claim 2, the overall theoretical value of the economic profit generated through business can be assessed. Further, using said theoretical stock price computing device makes it possible to assess the excess profits generated by the on-balance (balance sheet) investment capital and to substitute this for the future expected earnings to find the current value to estimate the aggregate total of the current value of the expected earnings obtained from the off-balance intangible assets based on patents and other intellectual assets.

(Characteristic of the present invention according to Claim 3)

A theoretical stock price computing device according to Claim 3 of the present invention is a theoretical stock price computing device of Claim 2, wherein the after-tax business income theoretical value calculation means comprise;
factor analysis means that conducts factor analysis using data concerning the company valuation indexes of multiple companies, extracts factors, and aggregates the company valuation indexes based on said factors;
multiple regression analysis means that performs multiple regression analysis using the factors extracted by the factor analysis means and the earnings related indexes shown by the various earnings, such as the intellectual assets related earnings of multiple companies, and derives a regression line showing the correlation between these;
gross business income theoretical value calculation means that, based on the regression line, calculates the theoretical value of the earnings related indexes of the company that is the theoretical stock price calculation target and that then, based on said theoretical value, calculates the gross business income theoretical value;
operating profit theoretical value calculation means that calculates the operating profit theoretical value by subtracting the book value of the research and development expenses from the gross business income theoretical value;
after-tax operating profit theoretical value calculation means that calculates the after-tax operating profit theoretical value by subtracting the corporate income tax from the operating profit theoretical value;
research and development expense deemed asset amount calculation means that calculates the deemed asset amount of research and development expenses using data relating to company valuation indexes including the intellectual assets related indexes; and
research and development expense deemed asset amount addition means that calculates the after-tax business income theoretical value by adding the research and development expense deemed asset amount to the after-tax operating profit theoretical value.

According to the theoretical stock price computing device of Claim 3, in addition to the effect of a theoretical stock price computing device according to Claim 2, it is also possible to assess to what degree the potential competitive power of companies can be strategically utilized and to what degree the potential competitive power can lead to improved manifest competitive power and earnings power because the after-tax business income theoretical value can be calculated after measuring the contribution of patents and other intellectual assets to the earnings and other business results.

(Characteristic of the present invention according to Claim 4)

A theoretical stock price computing device according to Claim 4 of the present invention is a theoretical stock price computing device of Claim 3, wherein the research and development expense deemed asset amount calculation means comprise;
research and development investment amount data acquisition means that acquires a research and development investment amount data;
depreciation expense calculation means that calculates as depreciation expense the loss portion of the research and development investment amount; and
depreciation expense subtraction means that calculates the research and development expense after depreciation by subtracting the depreciation expense from the research and development investment amount.

According to the theoretical stock price computing device of Claim 4, in addition to the effect of a theoretical stock price computing device according to Claim 3, it is also possible to correctly assess the essence of the profit that can be obtained through the business activities of a company by calculating the loss portion of the research and development investment amount as depreciation expense and then adding back to the After-tax operating profit theoretical value only the portion that contributed to the earnings generated from the realization of products, equipment, etc.

(Characteristic of the present invention according to Claim 5)

A theoretical stock price computing device according to Claim 5 of the present invention is a theoretical stock price computing device of Claim 4, wherein the depreciation expense calculation means comprise;
calculation means based on a macro company evaluation whereby the intellectual assets productivity, which shows the ratio with which intellectual assets is generated by the research and development investment of companies, and the intellectual assets profitability, which shows result rate produced by utilizing the intellectual assets, are measured and the depreciation expense by company is calculated; and/or
calculation means based on patent and other intellectual assets value valuation wherein the competitive power of patents and other intellectual assets of each company is created into an index and the depreciation expense is calculated separately for said patents and other intellectual assets.
According to the theoretical stock price computing device of Claim 5, in addition to the effect of a theoretical stock price computing device according to Claim 4, it is possible to calculate the depreciation expense of the research and development investment after measuring what kind of intellectual assets is generated by the research and development investment and to what results are lead from those assets. Further, it is also possible to calculate the depreciation expense of the research and development investment after clarifying to what degree the technology and know-how generated within a company will be effective as a source for obtaining competitive superiority with other companies.

(Characteristic of the present invention according to Claim 6)

A theoretical stock price computing method according to Claim 6 of the present invention is a method for calculating the theoretical stock price of a company based on company valuation indexes, comprising;
a data acquisition step to acquire data concerning company valuation indexes including intellectual assets related indexes;
an expected earnings calculation step to calculate the expected earnings of a company using data concerning company valuation indexes including the intellectual assets related indexes;
a discount rate calculation step to calculate the discount rate for deriving company present value using data concerning the company valuation indexes;
an estimated aggregate market value calculation step to calculate the estimated aggregate market value of a company by dividing the expected earnings by the discount rate; and
a theoretical stock price calculation step to calculate the theoretical stock price by dividing the estimated aggregate market value by the total number of outstanding shares.
The theoretical stock price computing method according to Claim 6 evaluates the comprehensive value of a company using information concerning the off-balance intangible assets based on patents and other intellectual assets as well as information concerning the on-balance (balance sheet) management and finances so as to calculate the expected earnings of the company. This makes it possible to assess the future earning power of a company by removing as far as possible actual stock price distortions resulting from arbitrary market trends, etc., that are unrelated to the intrinsic asset value of a company. This makes it possible to calculate a theoretical stock price that more closely matches the actual state of a company.

(Characteristic of the present invention according to Claim 7)

A theoretical stock price computing method according to Claim 7 of the present invention is a method for calculating the theoretical stock price of a company based on company valuation indexes, comprising;
a data acquisition step to acquire data concerning company evaluation indexes including intellectual assets related indexes;
an after-tax business income theoretical value calculation step to calculate the after-tax business income theoretical value of a company using data concerning company valuation indexes including the intellectual assets related indexes;
an investment capital cost calculation step to calculate the investment capital cost of a company using data concerning the company valuation indexes;
an economic profit theoretical value calculation step to calculate the economic profit theoretical value by subtracting the investment capital cost from the after-tax business income theoretical value;
a discount rate calculation step to calculate the discount rate to derive the current value of a company using data concerning the company valuation indexes;
a theoretical market value added calculation step to calculate the theoretical market value added by dividing the economic profit theoretical value by the discount rate;

an equity capital calculation step to calculate the equity capital of a company using data concerning the company valuation indexes;

an estimated aggregate market value calculation step to calculate the estimated aggregate market value of a company by adding the theoretical market value added to the equity capital; and

a theoretical stock price calculation step to calculate the theoretical stock price by dividing the estimated aggregate market value by the total number of outstanding shares.

According to the theoretical stock price computing method of Claim 7, the overall theoretical value of the economic profit generated through business can be assessed. Further, using said theoretical stock price computing method makes it possible to assess the excess profits generated by the on-balance (balance sheet) investment capital and to substitute this for the future expected earnings to find the current value to estimate the aggregate total of the current value of the expected earnings obtained from the off-balance intangible assets based on patents and other intellectual assets.

(Characteristic of the present invention according to Claim 8)

A theoretical stock price computing method according to Claim 8 of the present invention is a theoretical stock price computing method of Claim 7, wherein the after-tax business income theoretical value calculation step comprises;

a factor analysis step to conduct factor analysis using data concerning the company valuation indexes of multiple companies, extract factors, and aggregate the company valuation indexes based on said factors;

a multiple regression analysis step to perform multiple regression analysis using the factors extracted by the factor analysis step and the earnings related indexes shown by the various earnings, such as the intellectual assets related earnings of multiple companies, and derive a regression line showing the correlation between these;

a gross business income theoretical value calculation step, based on the regression line, to calculate the theoretical value of the earnings related indexes of the company that is the theoretical stock price calculation target and then, based on said theoretical value, calculate the gross business income theoretical value;

an operating profit theoretical value calculation step to calculate the operating profit theoretical value by subtracting the book value of the research and development expenses from the gross business income theoretical value;

an after-tax operating profit theoretical value calculation step to calculate the after-tax operating profit theoretical value by subtracting the corporate income tax from the operating profit theoretical value;

a research and development expense deemed asset amount calculation step to calculate the deemed asset amount of research and development expenses using data relating to company valuation indexes including the intellectual assets related indexes; and

a research and development expense deemed asset amount addition step to calculate the after-tax business income theoretical value by adding the research and development expense deemed asset amount to the after-tax operating profit theoretical value.

According to the theoretical stock price computing method of Claim 8, in addition to the effect of a theoretical stock price computing method according to Claim 7, it is also possible to assess to what degree the potential competitive power of companies can be strategically utilized and to what degree the potential competitive power can lead to improved manifest competitive power and earnings power because the after-tax business income theoretical value can be calculated after measuring the contribution of patents and other intellectual assets to the earnings and other business results.

(Characteristic of the present invention according to Claim 9)

A theoretical stock price computing method according to Claim 9 of the present invention is a theoretical stock price computing method of Claim 8, wherein the research and development expense deemed asset amount calculation step comprises;

a research and development investment amount data acquisition step to acquire a research and development investment amount data;

a depreciation expense calculation step to calculate as depreciation expense the loss portion of the research and development investment amount; and

a depreciation expense subtraction step to calculate the research and development expense after depreciation by subtracting the depreciation expense from the research and development investment amount.

According to the theoretical stock price computing method of Claim 9, in addition to the effect of a theoretical stock price computing method according to Claim 8, it is also possible to correctly assess the essence of the profit that can be obtained through the business activities of a company by calculating the loss portion of the research and development investment amount as depreciation expense and then adding back to the After-tax operating profit theoretical value only the portion that contributed to the earnings generated from the realization of products, equipment, etc.

(Characteristic of the present invention according to Claim 10)

A theoretical stock price computing method according to Claim 10 of the present invention is a theoretical stock price computing method of Claim 9, wherein the depreciation expense calculation step comprises;

a calculation step based on a macro company evaluation whereby the intellectual assets productivity, which shows the ratio with which intellectual assets is generated by the research and development investment of companies, and the intellectual assets profitability, which shows result rate produced by utilizing the intellectual assets, are measured and the depreciation expense by company is calculated; and/or

a calculation step based on patent and other intellectual assets value valuation wherein the competitive power of patents and other intellectual assets of each company is created into an index and the depreciation expense is calculated separately for said patents and other intellectual assets.

According to the theoretical stock price computing method of Claim 10, in addition to the effect of a theoretical stock price computing method according to Claim 9, it is possible to calculate the depreciation expense of the research and development investment after measuring what kind of intellectual assets is generated by the research and development investment and to what results are lead from those assets. Further, it is also possible to calculate the depreciation expense of the research and development investment after clarifying to what degree the technology and know-how generated within a company will be effective as a source for obtaining competitive superiority with other companies.

(Characteristic of the present invention according to Claim 11)

A theoretical stock price computing program according to Claim 11 of the present invention is a program for calculating the theoretical stock price of a company based on company valuation indexes, comprising;

a data acquisition function to acquire data concerning company valuation indexes including intellectual assets related indexes;

an expected earnings calculation function to calculate the expected earnings of a company using data concerning company valuation indexes including the intellectual assets related indexes;

a discount rate calculation function to calculate the discount rate for deriving company present value using data concerning the company valuation indexes;

an estimated aggregate market value calculation function to calculate the estimated aggregate market value of a company by dividing the expected earnings by the discount rate; and

a theoretical stock price calculation function to calculate the theoretical stock price by dividing the estimated aggregate market value by the total number of outstanding shares.

The theoretical stock price computing program according to Claim 11 evaluates the comprehensive value of a company using information concerning the off-balance intangible assets based on patents and other intellectual assets as well as information concerning the on-balance (balance sheet) management and finances so as to calculate the expected earnings of the company. This makes it possible to assess the future earning power of a company by removing as far as possible actual stock price distortions resulting from arbitrary market trends, etc., that are unrelated to the intrinsic asset value of a company. This makes it possible to calculate a theoretical stock price that more closely matches the actual state of a company.

(Characteristic of the present invention according to Claim 12)

A theoretical stock price computing program according to Claim 12 of the present invention is a program for calculating the theoretical stock price of a company based on company valuation indexes, comprising;

a data acquisition function to acquire data concerning company evaluation indexes including intellectual assets related indexes;

an after-tax business income theoretical value calculation function to calculate the after-tax business income theoretical value of a company using data concerning company valuation indexes including the intellectual assets related indexes;

an investment capital cost calculation function to calculate the investment capital cost of a company using data concerning the company valuation indexes;

an economic profit theoretical value calculation function to calculate the economic profit theoretical value by subtracting the investment capital cost from the after-tax business income theoretical value;

a discount rate calculation function to calculate the discount rate to derive the current value of a company using data concerning the company valuation indexes;

a theoretical market value added calculation function to calculate the theoretical market value added by dividing the economic profit theoretical value by the discount rate;

an equity capital calculation function to calculate the equity capital of a company using data concerning the company valuation indexes;

an estimated aggregate market value calculation function to calculate the estimated aggregate market value of a company by adding the theoretical market value added to the equity capital; and

a theoretical stock price calculation function to calculate the theoretical stock price by dividing the estimated aggregate market value by the total number of outstanding shares.

According to the theoretical stock price computing program of Claim 12, the overall theoretical value of the economic profit generated through business can be assessed. Further, using said theoretical stock price computing program makes it possible to assess the excess profits generated by the on-balance (balance sheet) investment capital and to substitute this for the future expected earnings to find the current value to estimate the aggregate total of the current value of the expected earnings obtained from the off-balance intangible assets based on patents and other intellectual assets.

(Characteristic of the present invention according to Claim 13)

A theoretical stock price computing program according to Claim 13 of the present invention is a theoretical stock price computing program of Claim 12, wherein the after-tax business income theoretical value calculation function comprises;

a factor analysis function to conduct factor analysis using data concerning the company valuation indexes of multiple companies, extract factors, and aggregate the company valuation indexes based on said factors;

a multiple regression analysis function to perform multiple regression analysis using the factors extracted by the factor analysis function and the earnings related indexes shown by the various earnings, such as the intellectual assets related earnings of multiple companies, and derive a regression line showing the correlation between these;

a gross business income theoretical value calculation function, based on the regression line, to calculate the theoretical value of the earnings related indexes of the company that is the theoretical stock price calculation target and then, based on said theoretical value, calculate the gross business income theoretical value;

an operating profit theoretical value calculation function to calculate the operating profit theoretical value by subtracting the book value of the research and development expenses from the gross business income theoretical value;

an after-tax operating profit theoretical value calculation function to calculate the after-tax operating profit theoretical value by subtracting the corporate income tax from the operating profit theoretical value;

a research and development expense deemed asset amount calculation function to calculate the deemed asset amount of research and development expenses using data relating to company valuation indexes including the intellectual assets related indexes; and

a research and development expense deemed asset amount addition function to calculate the after-tax business income theoretical value by adding the research and development expense deemed asset amount to the after-tax operating profit theoretical value.

According to the theoretical stock price computing program of Claim 13, in addition to the effect of a theoretical stock price computing program according to Claim 12, it is also possible to assess to what degree the potential competitive power of companies can be strategically utilized and to what degree the potential competitive power can lead to improved manifest competitive power and earnings power because the after-tax business income theoretical value can be calculated after measuring the contribution of patents and other intellectual assets to the earnings and other business results.

(Characteristic of the present invention according to Claim 14)

A theoretical stock price computing program according to Claim 14 of the present invention is a theoretical stock price computing program of Claim 13, wherein the research and development expense deemed asset amount calculation function comprises;

a research and development investment amount data acquisition function to acquire a research and development investment amount data;

a depreciation expense calculation function to calculate as depreciation expense the loss portion of the research and development investment amount; and

a depreciation expense subtraction function to calculate the research and development expense after depreciation by subtracting the depreciation expense from the research and development investment amount.

According to the theoretical stock price computing program of Claim 14, in addition to the effect of a theoretical stock price computing program according to Claim 13, it is also possible to correctly assess the essence of the profit that can be obtained through the business activities of a company by calculating the loss portion of the research and development investment amount as depreciation expense and then adding back to the After-tax operating profit theoretical value only the portion that contributed to the earnings generated from the realization of products, equipment, etc.

(Characteristic of the present invention according to Claim 15)

A theoretical stock price computing program according to Claim 15 of the present invention is a theoretical stock price computing program of Claim 14, wherein the depreciation expense calculation function comprises;
a calculation function based on a macro company evaluation whereby the intellectual assets productivity, which shows the ratio with which intellectual assets is generated by the research and development investment of companies, and the intellectual assets profitability, which shows result rate produced by utilizing the intellectual assets, are measured and the depreciation expense by company is calculated; and/or
a calculation function based on patent and other intellectual assets value valuation wherein the competitive power of patents and other intellectual assets of each company is created into an index and the depreciation expense is calculated separately for said patents and other intellectual assets.

According to the theoretical stock price computing program of Claim 15, in addition to the effect of a theoretical stock price computing program according to Claim 14, it is possible to calculate the depreciation expense of the research and development investment after measuring what kind of intellectual assets is generated by the research and development investment and to what results are lead from those assets. Further, it is also possible to calculate the depreciation expense of the research and development investment after clarifying to what degree the technology and know-how generated within a company will be effective as a source for obtaining competitive superiority with other companies.

According to the present invention, using the indexes obtained from patents and other intellectual assets representing off-balance intangible assets and adding data obtained from information concerning the management and finance of companies make it possible to comprehensively valuate how the respective companies are creating and operating the trinity management strategy consisting of business strategy, research and development strategy, and intellectual property strategy so as to increase the corporate value and to correctly calculate the future expected earnings based on these results and automatically calculate the theoretical stock price. Further, using the calculated theoretical stock price as a decision-making index makes it possible to compare the intrinsic company value of companies to appropriately determine if the market stock price is over priced or under priced. Further, it also provides a means for company management to determine whether the current stock price of its company in the stock market is over priced or under priced and take an appropriate business strategy.

BRIEF DESCRIPTION OF THE DRAWINGS

FIG. 1 is a diagram showing a configuration example of the theoretical stock price calculation system employing the theoretical stock price computing device according to the present embodiment;
FIG. 2 is a block diagram showing the configuration of the theoretical stock price computing device;
FIG. 3 is a flowchart showing the calculation steps of the theoretical stock price calculation;
FIG. 4 is a chart illustrating the business/management related index (No. 1);
FIG. 5 is a chart illustrating the business/management related index (No. 2);
FIG. 6 is a chart illustrating the R&D related index;
FIG. 7 is chart illustrating the intellectual asset related index (No. 1);
FIG. 8 is a chart illustrating the intellectual asset related index (No. 2);
FIG. 9 is a chart illustrating the intellectual asset related index (No. 3);
FIG. 10 is an example of a screen for selecting the industry and company;
FIG. 11 is a flowchart showing the steps for calculating the after-tax business income theoretical value;
FIG. 12 is a flowchart of the factor analysis processing steps;
FIG. 13 is a flowchart of the multiple regression analysis processing steps;
FIG. 14 is a diagram showing an example of the results of the factor analysis;
FIG. 15 is a diagram showing an example of the results of the multiple regression analysis;
FIG. 16 is a diagram showing an example of the relation among the ROA $\beta$, factors, and indexes;
FIG. 17 is a diagram showing an example for finding the ROA $\beta$ theoretical value from the regression line;
FIG. 18 is a diagram showing example calculation results for the ROA $\beta$, gross business income, and operating profit; and
FIG. 19 is a diagram showing an example of the calculation results of the theoretical stock price.

EXPLANATION OF SYMBOLS

| | |
|---|---|
| 10 | Communication network |
| 20 | External database server |
| 20A | External database |
| 30 | Theoretical stock price computing device |
| 30A | Internal database |
| 31 | Printer |
| 100 | Theoretical stock price calculation system |
| 301 | CPU |
| 302 | ROM |
| 303 | RAM |
| 304 | Recording medium mounting unit |
| 305 | Recording medium |
| 306 | Recording medium interface |
| 307 | Calendar clock |
| 308 | Transmission/reception means |
| 309 | Communication line |
| 310 | Input means |
| 311 | Input interface |
| 312 | Display means |
| 313 | Display interface |
| 314 | Recording means interface |
| 315 | HDD |
| 316 | Printer interface |
| 317 | Bus |

DETAILED DESCRIPTION OF THE PREFERRED EMBODIMENTS

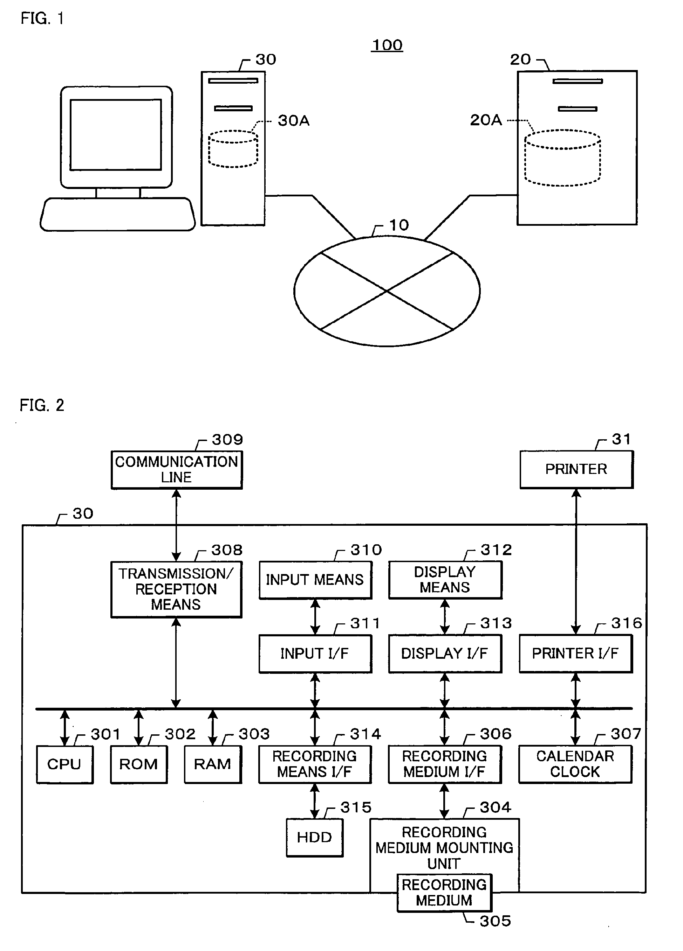

Embodiments of the present invention are now explained with reference to FIG. 1 and FIG. 2. FIG. 1 is a diagram showing the constitution of a theoretical stock price calculation system 100 containing a theoretical stock price computing device 30 according to the present embodiment.

The theoretical stock price calculation system 100 is constituted from a theoretical stock price computing device 30 and an external database server 20. The theoretical stock price computing device 30 is connected to the external database server 20 via a communication network 10 such as the Internet, for instance, or is capable of incorporating external data from the external database server 20 offline via an appropriate recording medium.

Further, the external database 20A is a database within the external database server 20 and includes all databases that can be accessed free of charge or for a charge excluding the internal database. Such external databases 20A can be, for example, the databases of an organization or company that provides databases containing financial statements issued by companies; databases of organizations or companies provided data containing market value information such as stock prices, research and development related information, and intellectual assets related information; databases of technical documents; Industrial Property Digital Library (IPDL) of the National Center for Industrial Property Information and Training, and other intellectual property databases provided by intellectual property related organizations.

The theoretical stock price computing device 30 is constituted from a computer such as a personal computer or workstation, and has an internal database 30A.

The internal database 30A stores, for instance, industry/company data storing company names based on industry or alphabetical order; corporate indexes, such as business/management related indexes, or research and development related indexes or intellectual assets related indexes. Further, it records information relating to stocks, such as current and past stock prices or the aggregate market value for companies, company valuation index classifications, multivariate analysis and other formulas, constants and threshold values used for multivariate analysis, and other information including adequacy determination results and classifications based on said threshold values.

FIG. 2 is a block diagram showing the constitution of the theoretical stock price computing device 30. As shown in FIG. 2, the theoretical stock price computing device 30 has a CPU 301, a ROM 302, a RAM 303, a recording medium mounting unit 304, a recording medium 305, a recording medium interface 306, a calendar clock 307, a transmission/ reception means 308, a communication line 309, an input means 310, an input interface 311, a display means 312, a display interface 313, a recording means interface 314, a recording means 315 such as a hard disk (HDD), a printer interface 316, and a bus 317.

The CPU 301 controls the overall operation of the theoretical stock price computing device 30 while using the RAM 303 as the work area according to program information for the theoretical stock price computing device.

Incidentally, as a substitute for execution by the CPU 301, a plurality of dedicated processing devices may be provided so as to make the respective processing devices share and execute such processing.

The recording medium 305 is detachably mounted to the recording medium mounting unit 304. Further, the recording medium mounting unit 304 is connected to the bus 317 via the recording medium interface 306 which records and reads various types of information in and from the recording medium 305. Incidentally, the recording medium 305 is a detachable recording medium of a magnetic recording system or optical recording system as represented by semiconductors such as a memory card, MO or magnetic disk. The recording medium 305 is capable of housing the internal database 30A. Incidentally, the recording medium 305 is also capable of incorporating external data from the external database server 20 offline.

The calendar clock 307 is used as a time keeping clock means, and is connected to the bus 317.

The transmission/reception means 308 is connected to the external database server 20 with the communication line 309, and, when showing the analysis results, it communicates with the external database server 20 via the communication network 10, and acquires corporate valuation indexes and stock prices of companies from the external database 20A of the external database server 20. The acquired data is stored in the HDD 315 or recording medium 305 as the internal database 30A. Incidentally, in the theoretical stock price computing device 30, index data may be selected automatically or manually upon acquiring corporate valuation indexes and stock prices of companies from the external database 20A.

The input means 310 is the likes of a keyboard, mouse, tablet or touch panel, and is connected to the bus 317 via the input interface 311. This input means 310 is used for selecting whether to update data, selecting the industry/ company and selecting the analyzing method in the selection screen (not shown) of various instructions displayed on the display means 312.

The display means 312, for instance, is constituted from the likes of an LCD (Liquid Crystal Display), and is connected to the bus 317 via the display interface 313. This display means 312 displays the data input from the input means 310 and options of operational instructions on the screen. Further, the display means 312 displays the results of the calculated theoretical stock price on the screen.

The HDD (hard disk) 315 is a recording means storing various types of information such as the various constants relating to the processing of the theoretical stock price computing device 30 and attribute information upon communicating with a communication device on a network; connection information such as URL (Uniform Resource Locators), gateway information and DNS (Domain Name System); management/finance information regarding the management of companies; technical documents concerning patents; patent information; market value information; and threshold values for determining the corporate value and determination results of adequacy based on such threshold value.

Further, the information stored in the HDD 315 can be read out via the recording means interface 314, and information can also be written in the HDD 315. The HDD 315 houses the internal database 30A having recorded thereon various data.

The printer 31 is connected to the bus 317 via the printer interface 316. This printer 31, as a printing means, prints the chart, graph data, and the like concerning the theoretical stock price calculation results of the various companies created by the theoretical stock price computing device 30 on a paper medium or the like.

The theoretical stock price computing device 30 constituted in this manner utilizes business and management related indexes such as capital investment amount, research and development related indexes such as research and development expense, and intellectual assets related indexes such as number of patent applications, which are public data, to calculate the theoretical stock price of companies.

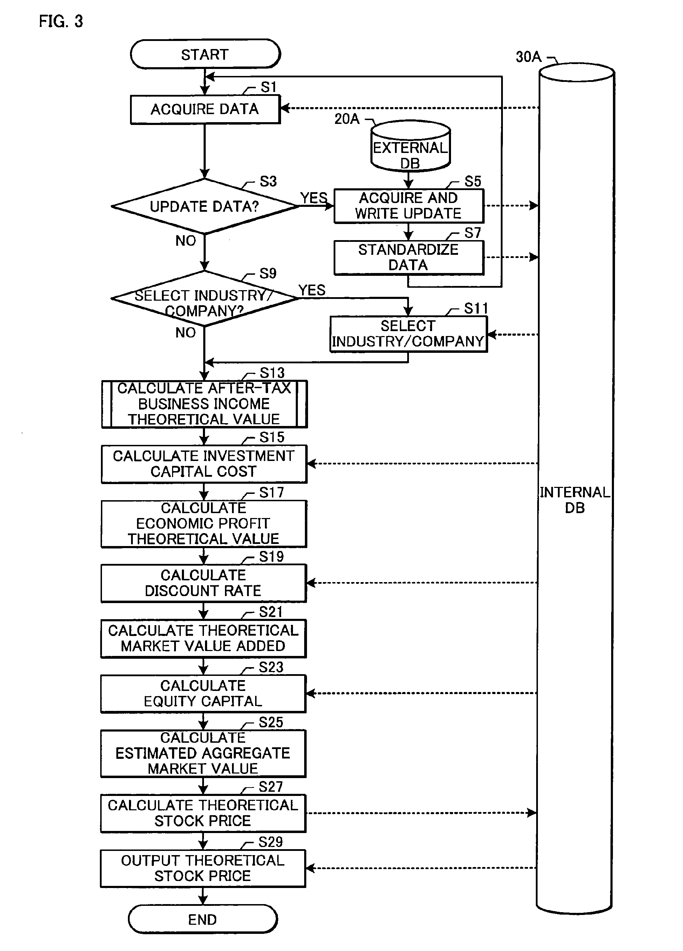

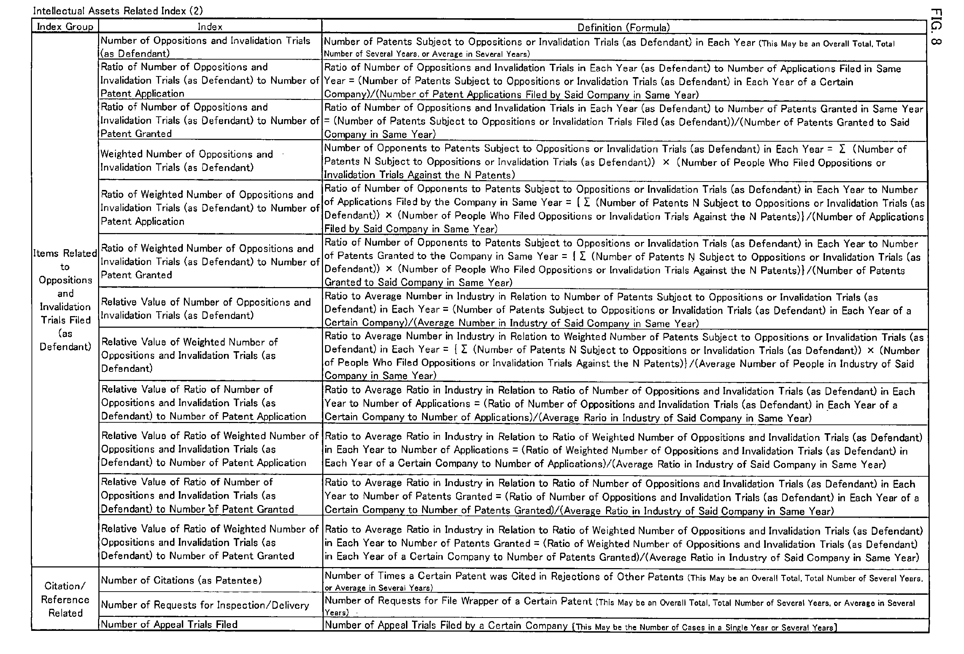

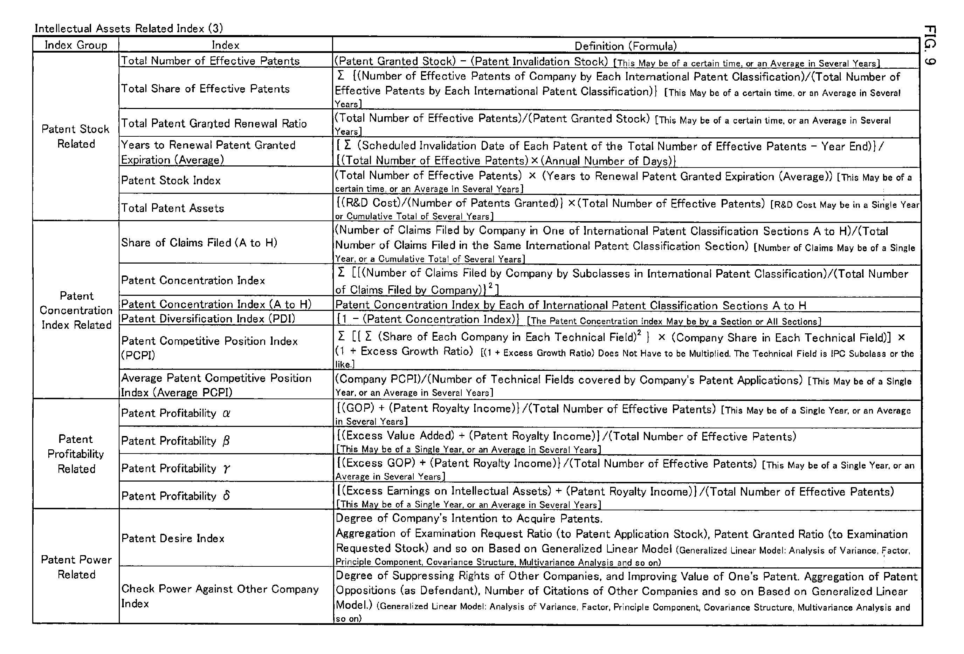

Next, the theoretical stock price calculation processing steps using the theoretical stock price computing device and the theoretical stock price computing method and program are explained with reference to FIG. 3 to FIG. 19.

FIG. 3 is a flowchart representing the processing steps of the theoretical stock price calculation based on the theoretical stock price calculation system 100. This processing is realized pursuant to the control of the CPU 301 based on the information incorporated in the theoretical stock price computing program.

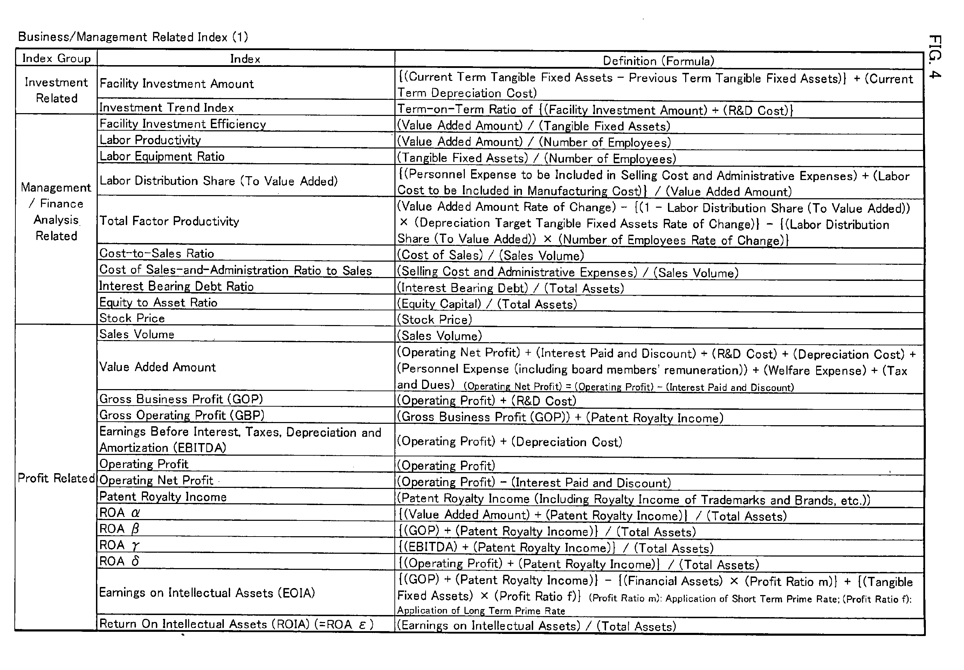

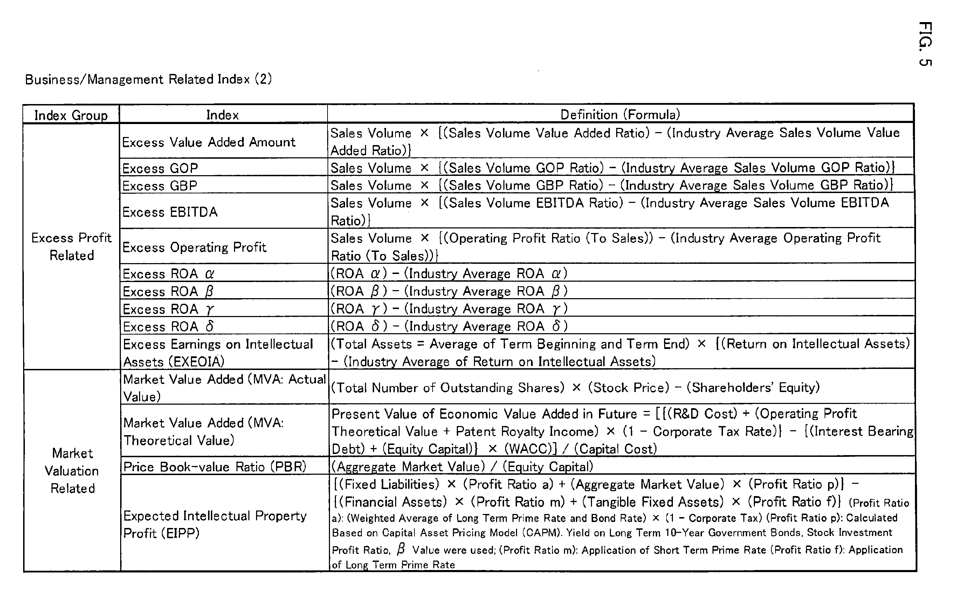

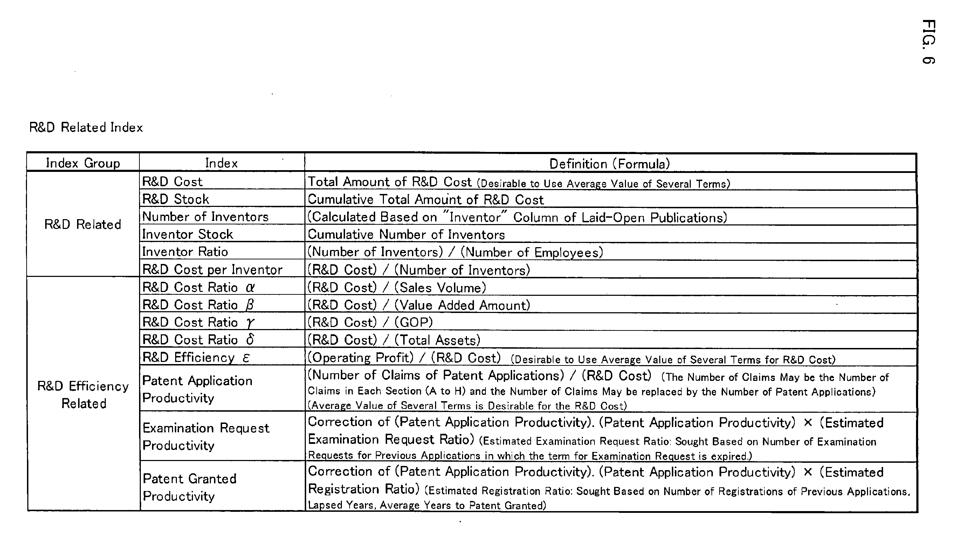

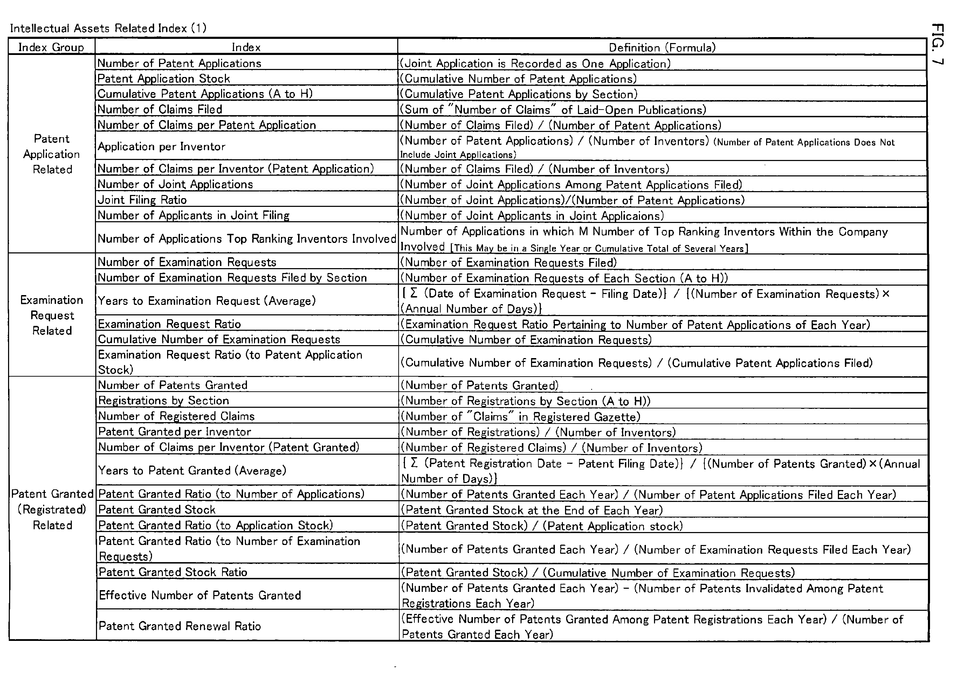

The theoretical stock price computing device 30, foremost, at step S1, acquires necessary data from the internal database 30A. Here, the acquired data types, for example, are corporate indexes such as business/management related indexes, research and development related indexes, intellectual asset related indexes, or data on the stock prices of the respective companies. FIG. 4 and FIG. 5 are diagrams showing a list of the business/management related indexes. The business and management related indexes, for instance, are indexes of the capital investment amount, capital investment efficiency and so on. FIG. 6 is a diagram showing a list of the R&D related indexes. The R&D related indexes, for instance, are indexes of the R&D expense, R&D intensity $\alpha$ and so on. FIG. 7 through FIG. 9 are diagrams showing a list of the intellectual assets related indexes. The intellectual assets related indexes, for instance, are indexes of the number of patent applications filed, number of examination requests filed, or total number of effective patents, number of claims filed, and so on.

The internal database 30A stores live data acquired from the external database 20A and standardized processing data.

Next, at step S3, whether the update of data is required is determined. For example, a daily predetermined time is set as the data update time, and update processing is performed at such time. Or, data may be updated each time new data is added to the external database 20A.

When it is determined that an update is required, at step S5, updated data is acquired from the external database 20A and written in the internal database 30A. Then, at step S7, standardization of data is performed according to formula 1 below in relation to the data acquired from the external database 20A. The reason for performing this standardization of data is primarily for eliminating the gaps of numerical values arising pursuant to the difference of units and scales among industries or indexes.

$$\texttt{Data standardization = (Live Data - Average Live}$$

$$\texttt{Data)/Standard Deviation ...(Formula 1)}$$

Then, the data standardized for each industry or each index is stored in the internal database 30A. After the standardization of data, the routine returns to step S1, and acquires the updated data. Next, at step S3, when it is determined that the update of data is not required, the routine proceeds to step S9 for the selection of industry/company.

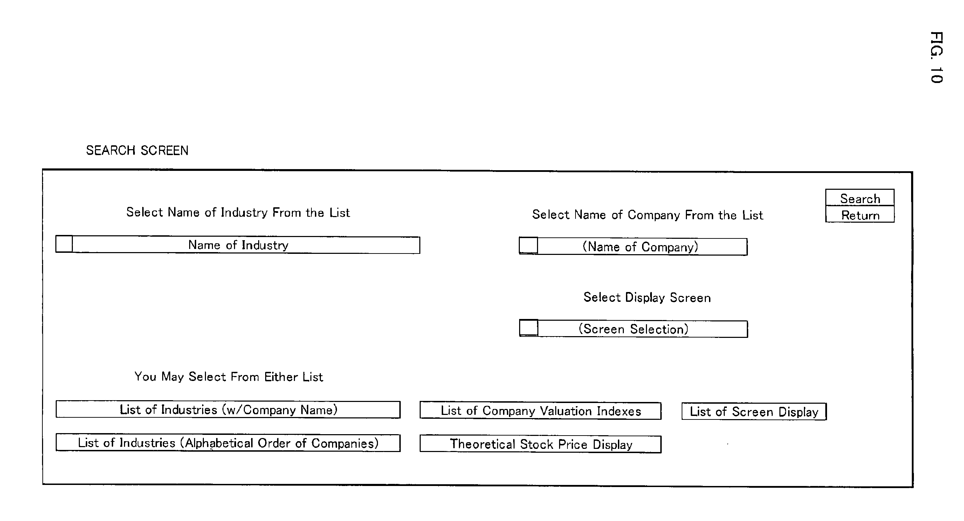

At step S9, whether the industry and/or company is to be selected is determined. Here, when the user determines that the selection of the industry and/or company is required and inputs instructions to the effect of inputting the industry and/or company, at step S11, the selection of the desired industry and/or specific company is accepted. For example, as shown in FIG. 10, the user may input the industry name or company name in the input unit of the industry or company name displayed on the display screen so as to select the desired industry and specific company. Further, for instance, by the user may also select the desired industry and specific company by selecting the option of the industry name and company name displayed on the display screen.

In addition, the theoretical stock price of respective companies can be calculated not only for general industries but also by product or by technical field, for example. The theoretical stock price for respective companies can be calculated, for example, based on classification by International Patent Classification (IPC) section, class, sub class, or main group; by US Patent Classification (UPC), or by US Standard Industrial Classification (SIC).

Next, at step S13 the data relating to acquired company valuation indexes (company valuation indexes or processed data thereof such as standardized data) is employed to calculate the after-tax business income theoretical value in order to calculate the theoretical value of the income acquired through the business activities of the respective companies. The after-tax business income theoretical value is the theoretical value of the deemed after-tax gross business income. Here, the gross business income is obtained by adding patent and other royalty income to an income amount found by adding back the R&D cost that was processed as an expense to the operating profit. The reason the theoretical value of the gross business income instead of the operating profit is used is, first, to identify the income obtained by the company before the R&D expense is subtracted. Second, by incorporating the income based on the patent and other industrial property generated from the results of R&D, to identify whether or not the company potential competitive power is valuated suitably and to what degree the potential competitive power is contributing to the manifest competitive power and earnings. Note that the patent and other royalty income is accounted for as non-operating income by the accounting procedures, but some companies do not have an account for non-operating income. In this case, it is already included in the operating profit or is not stated because the amount does not have a significant impact on the financial statements, and for one of these reasons is not added to the operating profit.

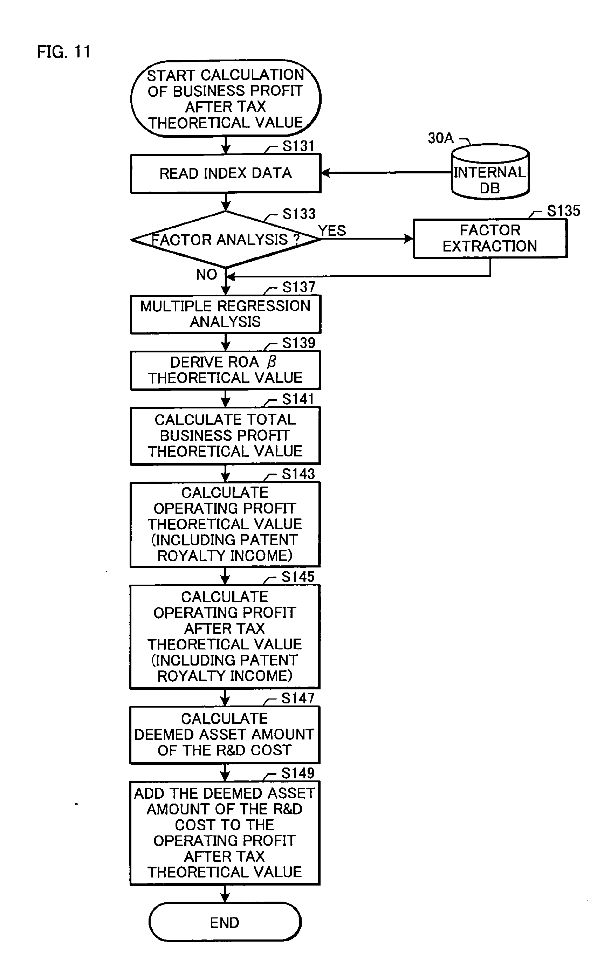

FIG. 11 is a flow chart that shows the processing steps for calculating the after-tax business income theoretical value. First, in step S131 the data related to company valuation indexes, including the intellectual assets related indexes, is obtained from the internal database 30A.

Next, in step S133, whether or not to perform factor analysis processing is selected. For example, if there is still no factor analysis results data concerning the acquired index data, or if the user has entered instructions to perform the factor analysis processing, factor analysis is conducted in step S135 for the acquired index data.

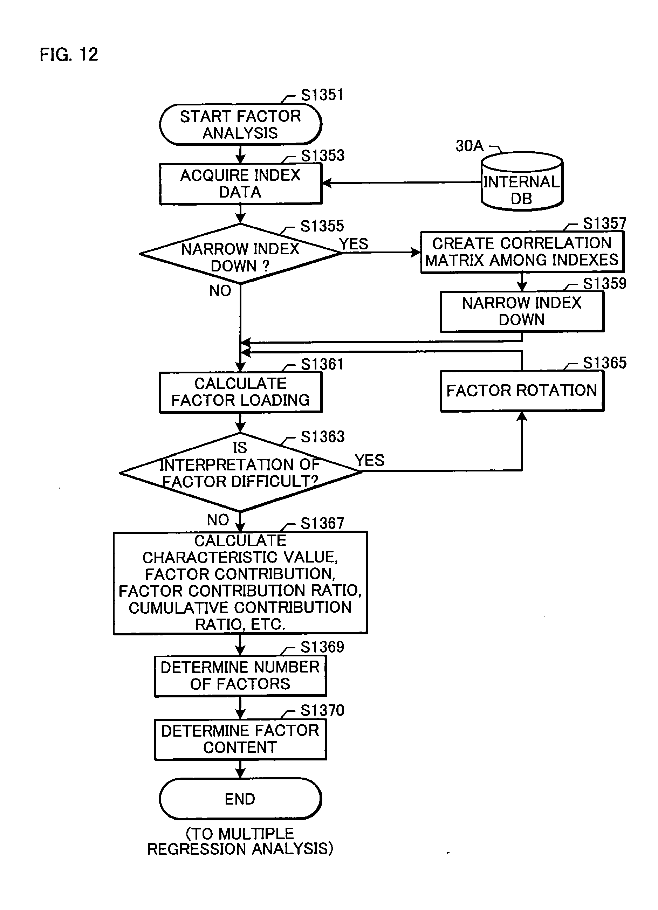

Here, factor analysis processing is explained with reference to the flowchart of FIG. 12. Factor analysis is the method of searching for a common factor hiding behind a certain observation data and which prescribes the same. The purpose of performing factor analysis is to clarify the characteristics and structure of the indexes by clarifying the potential factors prescribing such various indexes, and uniting these indexes into the clarified factors.

Foremost, at step S1351, factor analysis processing is commenced, and, at step S1353, data concerning the index of multiple companies to become the sample is acquired from the internal database 30A. Nevertheless, the profit related index contained in the business/management related index of FIG. 4 and FIG. 5 will be excluded. This is because the profit related indexes will be used as the target variable in the multiple regression analysis described later.

Next, at step S1355, whether the narrowing down of indexes will be performed is selected. For example, if the number of indexes acquired in the above-mentioned step S1353 exceeds the specified threshold, or when the user inputs instructions for narrowing down of the indexes, the indexes are narrowed down. In this case, at step S1357, the correlation matrix of each index is calculated. And, at step S1359, remotely related indexes without any commonality are removed, and deeply related and strongly associated indexes are extracted. Thereafter, the routine proceeds to the calculation of factor loading at step S1361.

When the narrowing down of indexes is not performed in advance at step S1355, the routine proceeds directly to the calculation of factor loading at step S1361. Here, factor loading is the value showing the strength of influence against the observed variable of the factor. In the factor analysis, the primary objective is to calculate this factor loading. As the calculation method of this factor loading, a principal factor method or maximum likelihood method, least square method, or generalized least square method and the like are known. In an embodiment of the present invention, the principal factor method is employed. The principal factor method is a method of calculating the factor loading in order from the first factor such that the factor contribution of the respective factors will become maximum. Incidentally, the calculation method of the factor loading may be arbitrarily selected according to the objective or nature of the observation.

Next, at step S1363, whether it is difficult to interpret the factors based on the calculated factor loading is determined. When the user determines that it is difficult to interpret the factors and makes an input to such effect, factor rotation is performed at step S1365 in order to search for the solution capable of optimally interpreting the data. The method of rotation may be an orthogonal rotation or an oblique rotation, and this may be arbitrarily selected according to the objective and nature of the observation. In an embodiment of the present invention, Varimax rotation, which is a type of orthogonal rotation, is employed. Varimax rotation is a rotation method of rotating the factors such that those with the factor loading of each factor closest to 0 and those with a large absolute value will increase, and thereby searching for the degree of contribution of the factor. And, after the factor rotation, the routine returns to step S1361 and calculates the rotated factor loading. Incidentally, at step S1363, when it is determined that it is not difficult to interpret the factors, factor rotation is not performed, and the initial solution of the calculated factor loading is used without change.

Next, at step S1367, the characteristic value, factor contribution, factor contribution ratio and cumulative contribution ratio of each factor is calculated based on the calculated factor loading. A characteristic value is the numerical value output when calculating the initial solution of the factor loading. The characteristic value is calculated for each factor as though there is the same number of factors as the number of indexes. As a result, an arbitrary minimum characteristic value will be selected as the criterion for determining the number of factors to be adopted. Further, factor contribution is an amount of a certain factor capable of explaining the data, and is calculated for each factor based on the sum of squares of the factor loading of each index. Incidentally, at the point in time of calculating the initial solution of the factor loading, the characteristic value and the factor contribution value are the same. Further, a factor contribution ratio is the ratio of a certain factor that explains the overall data, and is calculated by dividing the factor contribution by the number of indexes. Finally, a cumulative contribution ratio is a value in which the factor contribution is accumulated pursuant to the increase of factors, and is an index showing up to how many factors are able to explain data to what degree.

Next, at step S1369, the number of factors is determined based on the calculated characteristic value, factor contribution and cumulative contribution ratio. Theoretically, the number of factors is represented for the number of indexes. Thus, in an embodiment of the present invention, as the criterion upon determining the number of factors, a judgment criterion in which the characteristic value is 1 or more and the cumulative contribution ratio is 80% or more is used. As a result, 3 factors are selected in an embodiment of the present invention.

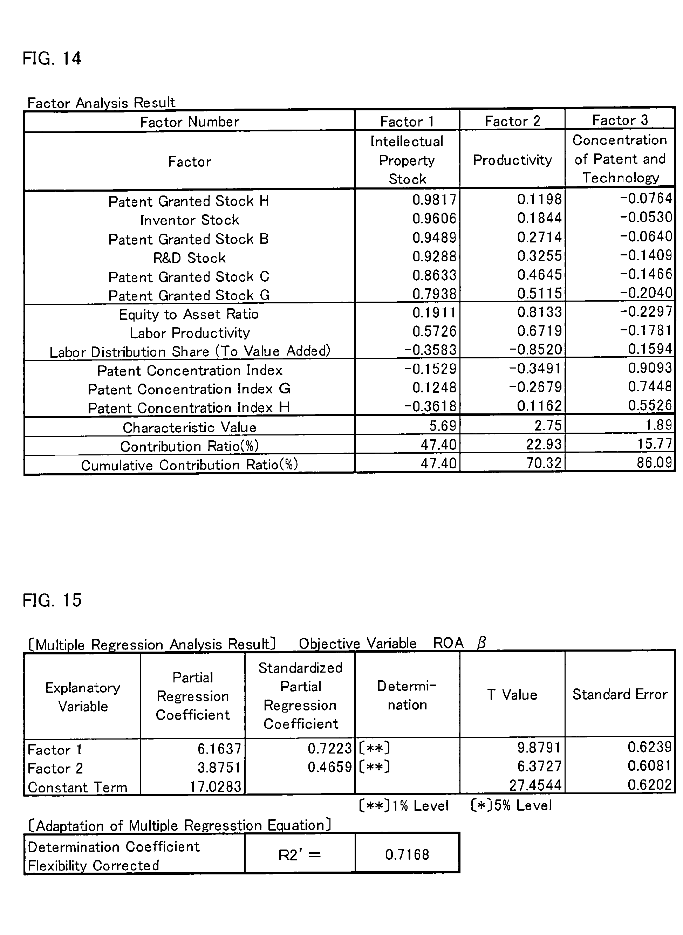

FIG. 14 is a list showing the factor loading, characteristic value, factor contribution, and cumulative contribution ratio for each index of the 3 factors selected in an embodiment of the present invention. Incidentally, the judgment criterion is not limited to the above, and this may be arbitrarily set according to the objective and nature of the observance.

Next, at step S1370, the factor content is determined. Specifically, the significance of the 3 factors selected at step S1369 is interpreted based on the factor loading calculated for each index that constitutes each factor. Next, the factor names are determined based on the interpretation results. The factor name of each of the factors 1 to 3 is as shown in the title column in the list of FIG. 14.

Foremost, when viewing factor 1, among the indexes constituting factor 1, it is evident that the indexes having a large factor loading are the following 6 indexes; namely, the patent granted stock by International Patent Classification (IPC) sub class (C, G, B, H), inventor stock, and R&D stock. Here, the patent granted stock by International Patent Classification (IPC) sub class is an index that shows the total number of patent registrations as of the end of each year for the total number of patent applications by International Patent Classification (IPC) sub class since 1994. Further, the inventor stock is and index that shows the total number of inventors for each company as of the end of each year in regards to the total number of patent applications since 1994. Note that the number of inventors is tabulated in the "Inventor" column of the Unexamined Patent Application Bulletin. Further, R&D stock is an index that shows the total R&D cost for each company as of the end of each year since 2000.

From the above results, when interpreting the significance of factor 1, it could be said that factor 1 is a factor that increases the total number of patent registrations in a particular technical field, accumulates know-how through the investment of R&D expenses, and accumulates human capital by increasing the number of inventors. More specifically, factor 1 can be interpreted to be a factor that increases the stock of intangible assets represented by patents and other intellectual assets. Based on this interpretation result, the factor name of factor 1 will be called "intellectual assets stock."

Next, looking at factor 2, of the indexes that constitute factor 2, there are 3 indexes with a large factor loading; namely, equity to asset ratio, labor productivity, and labor distribution share. Here, the equity to asset ratio is an index that shows the ratio of equity capital to total assets as of the end of each year for the respective companies. Further, labor productivity is an index that shows the value added amount per employee for the respective years of the respective companies. Also, the labor distribution share is an index that shows the ratio of the total value added amount per the labor cost for the respective years of the respective companies.

In view of this, when interpreting the significance of factor 2, it can be said that factor 2 is a factor that increases productivity by suppressing labor costs while increasing labor productivity and technical innovation. Based on this interpretation result, the factor name of factor 2 will be called "productivity."

Next, looking at factor 3, of the indexes that constitute factor 3, there are 3 indexes with a large factor loading; namely, patent concentration index, patent concentration index G, and patent concentration index H. Here, patent concentration index is the composition percentage for the number of claims filed by International Patent Classification (IPC) sub class of the overall number of claims filed of patent applications for the respective years for the respective companies, and it is also an index that shows the concentration of technical development field of the respective companies.

In view of this, when interpreting the significance of factor 3, it can be said that factor 3 is a factor that increases patent asset value when the respective companies conduct R&D and technical development concentrated in specific technical fields and obtain focused patents. Based on this interpretation result, the factor name of factor 3 will be called "concentration of patents/technology."

Returning once again to the flowchart of FIG. 33 representing the processing steps for after-tax business income theoretical value calculation, after extracting the factors at step S135, factor analysis processing is ended, and multiple regression analysis processing is performed at step S135. The multiple regression analysis processing is now explained.

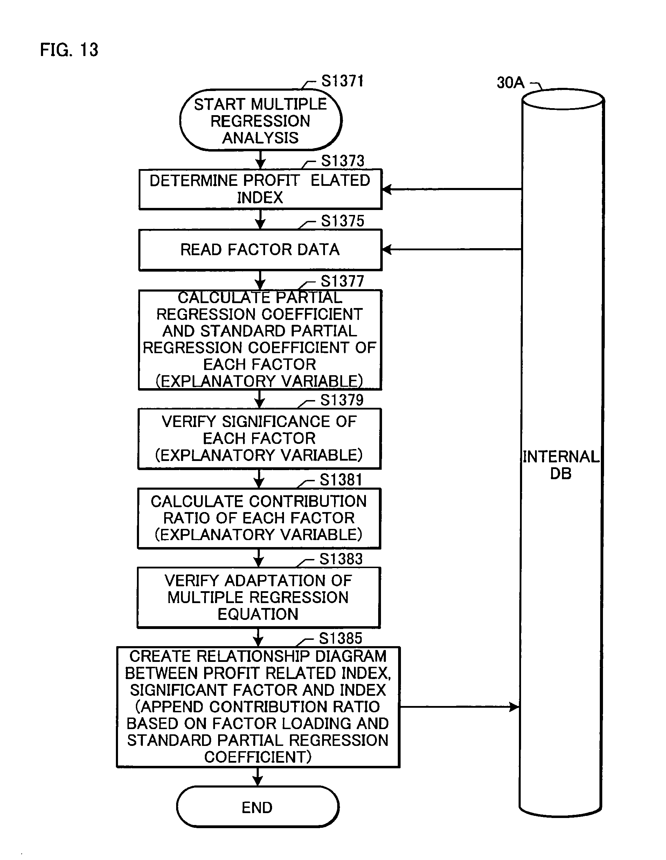

FIG. 13 is a flowchart representing the processing steps of the multiple regression analysis. Here, multiple regression analysis is a method of analyzing to what degree the value of the target variable can be explained based on the prediction relation constituted from such target variable and a plurality of explanatory variables. Incidentally, a target variable and explanatory variable are sometimes set as a dependent variable and independent variable according to the objective of analysis.

The purpose of performing multiple regression analysis is to verify whether the 3 factors clarified as a result of the foregoing factor analysis are actually contributing to the profit increase of the company. Further, among the above, it also specifies the factors with a high contribution ratio in relation to the profit and which indexes constitute such factors.

At step S1371, multiple regression analysis processing is performed. Foremost, at step S1373, the profit related index data is loaded from the list of the profit related index data stored in the internal database 30A, and the profit related index to be the target variable is determined. An example of the type and definition of the profit related index data is as per the profit related index list contained in the business/management related index of FIG. 4 and FIG. 5. Incidentally, the profit related index shown in FIG. 4 and FIG. 5 is primarily related to the business performance and results of the company, but the profit related index is not limited to the above, and arbitrary indexes may be set according to the objective or nature of analysis.

In an embodiment of the present invention, the profit related index is represented with an ROA. ROA is the abbreviation of Return On Asset, and this is also referred to as the total assets profit ratio. ROA is the ratio obtained by dividing the current profit by the total assets, and is an index for measuring how much profit was gained from the total assets. The reason the index for comprehensively valuating the business performance of companies is represented with ROA is because ROA is an appropriate achievement index for representing the annual assets efficiency of a company. Although there is a similar index referred to as ROE (Return On Equity), ROE is not adopted in an embodiment of the present invention. The reason for this is because ROE is used for measuring the profit per equity capital, and, in order to the company to actually gain profit, it must utilize outside capital in addition to the equity capital, and it has been determined that it is difficult to measure the true assets efficiency of companies with ROE.

Further, in an embodiment of the present invention, instead of ordinary ROA, this is the ratio of total assets of the gross business income generated each fiscal year by the respective companies, and ROA $\beta$ is set as the target variable. The calculation formula of ROA $\beta$ is as shown in Formula 2 below.

$$\text{ROA } \beta = \text{Gross business income/Total Assets} \cdots \text{(Formula 2)}$$

The reason ROA $\beta$ is used as the target variable is, firstly, because intellectual assets such as patents are a part of the assets owned by the company, ROA $\beta$ is a more suitable index for measuring how much profit was gained by utilizing tangible assets and intellectual assets such as patents. Secondly, in order to appropriately valuate the potential competitive power of companies and to measure to what degree such potential competitive power is connected to the overt competitive power and profit, it is necessary to incorporate the profits from intellectual assets such as patents generated as a result of R&D. Note that the profit related indexes used for the target variables are not limited to ROA β but that any of the profit related indexes can be used in accordance with the analysis objective and nature.

Next, at step S1375, the 5 factors extracted as a result of the factor analysis performed at step S135 are read from the internal database 30A. In an embodiment of the present invention, the 3 factors of factor 1 (intellectual asset stock), factor 2 (productivity), and factor 3 (concentration of patents/technology) are adopted.

Next, at step S1377, the profit related index ROA β of the multiple companies that make up the sample is made the target variable, and foregoing factors 1 to 3 are made the explanatory variables upon performing multiple regression analysis, and the partial regression coefficient, standard partial regression coefficient, and t value of the respective factors (explanatory variables) are calculated.

Specifically, foremost, the multiple regression equation represented with Formula 3 below is hypothesized for calculating the value of the ROA β (target variable) with the information of the respective factors (explanatory variables).

$$Y_j = \alpha + \beta_1 x_{1j} + \beta_2 x_{2j} + \beta_3 x_{3j} + \epsilon_j \quad (j = 1, 2, 3, \cdots, N)$$

$$\cdots \text{(Formula 3)}$$

In the foregoing formula, $Y_j$ is the target variable, and $x_{ij}$ ($j = 1, 2, 3, \cdots$, N: N represents the number of samples) is the explanatory variable. Further, $\alpha$ and $\beta_i$ ($i = 1, 2, 3$) are parameters to be estimated from the observation data of the explanatory variable $x_{ij}$, $\alpha$ is the constant term, and $\beta_i$ is the partial regression coefficient. $\epsilon_j$ ($j = 1, 2, 3, \cdots$, N) is the residual of the observed value of target variable $Y_j$ and the theoretical value, and represents portions that are not explained with the explanatory variable $x_{ij}$. Incidentally, with respect to explanatory variable $x_{ij}$, since appropriate analysis is performed upon eliminating the influence of the difference among indexes relating to the unit or scale of indexes, it is desirable to use standardized data. The standardization of data is performed with foregoing Formula 1.

Next, the values of constant term $\alpha$ and partial regression coefficient $\beta_i$ contained in Formula 3 are calculated with the estimation method referred to as the least square method. The least square method is a method of minimizing the sum of squares of the residual of the observed value and theoretical value. In the case of Formula 3 above, foremost, when the value of explanatory variable $x_{ij}$ is provided, the theoretical value of target variable $Y_j$ will be $\alpha + \Sigma_{i=1}^{3}(\beta_i x_{ij})$, and, therefore, residual $\epsilon_j$, which is the difference between the theoretical value and observed value, will be calculated with Formula 4 below.

$$\epsilon_j = Y_j - \left\{ \alpha + \Sigma_{i=1}^{3} (\beta_i x_{ij}) \right\} \qquad \cdots \text{(Formula 4)}$$

Next, the sum of squares of the residual is calculated with Formula 5 below.

$$Q = \Sigma_{j=1}^{N} \left[ \left\{ Y_j - \alpha - \Sigma_{i=1}^{3} (\beta_i x_{ij}) \right\}^2 \right] \qquad \cdots \text{(Formula 5)}$$

In the foregoing formula, Q is the value calculated as the sum of squares of the residual. Since the least square method is a method of minimizing the sum of squares of the residual, it is necessary to minimize the value of Q in Formula 5 in order to calculate constant term $\alpha$ and partial regression coefficient $\beta_i$. And, the values of constant term $\alpha$ and partial regression coefficient $\beta_i$ are sought by performing partial differentiation to Formula 5 above respectively with $\alpha$ and $\beta_i$, and solving the simultaneous equations equaling 0. Specifically, this is as per Formula 6 and Formula 7 below.

$$\partial Q / \partial \alpha = -2 \Sigma_{j=1}^{N} \left\{ Y_j - \alpha - \Sigma_{i=1}^{3} (\beta_i x_{ij}) \right\} = 0 \qquad \cdots \text{(Formula 6)}$$

$$\partial Q / \partial \beta_i = -2 \Sigma_{j=1}^{N} \left[ x_{ij} \left\{ Y_j - \alpha - \Sigma_{i=1}^{3} (\beta_i x_{ij}) \right\} \right] = 0 \quad \cdots \text{(Formula 7)}$$

Incidentally, the value of the partial regression coefficient will change significantly when the unit or scale of the explanatory variable is changed. Accordingly, in an embodiment of the present invention, pursuant to the standardization of data of the index to be used in explanatory variable $x_{ij}$, it is necessary to separately calculate the partial regression coefficient corresponding to the standardized explanatory variable (hereinafter referred to as the "standard partial regression coefficient").

After calculating the partial regression coefficient (and standard partial regression coefficient) $\beta_i$, at step S1379, the significance of the respective factors used in explanatory variable $x_{ij}$ is verified. Specifically, foremost, a hypothesis that explanatory variable $x_{ij}$ is absolutely ineffective in the prediction of target variable $Y_j$ (hereinafter referred to as the "null hypothesis"). This null hypothesis is represented by the partial regression coefficient (and standard partial regression coefficient) $\beta_i$ being 0. Incidentally, as the hypothesis to be used for verification, in addition to this null hypothesis, there is an alternate hypothesis of performing verification on the premise that the explanatory variable is effective in the prediction of the target variable. Any of these hypotheses may be used according to the objective and nature of analysis. Further, verification based on both of these hypotheses may be conducted, and one of such hypotheses may be adopted.

Next, in order to verify whether the hypothesis of partial regression coefficient (and standard partial regression coefficient) $\beta_i = 0$, t value is calculated based on $\beta_i = 0$. t value is the numerical value showing the statistical reliability of the value of the calculated explanatory variable.

After the calculation of t value, the position occupied by the calculated t value on the t distribution is specified. Here, t distribution is a probability density variable for estimating the scope of the average value of the parent population from a certain finite number of sample data.

Further, when specifying the position occupied in the t distribution by the t value, a boundary line for determining whether to adopt or reject the hypothesis of $\beta_i = 0$ is set on the t distribution. This boundary line is referred to as the significant level. A significant level is represented based on the probability of the calculated t value occurring on the t distribution. In an embodiment of the present invention, the significant level is set to 5%. This shows that the hypothesis will be rejected when the probability of the calculated t value occurring on the t distribution is within the range of 5%. The area for accepting the hypothesis with this significant level as the criterion is referred to as the adopted area, and the area for rejecting the hypothesis is referred to as the rejected area.

Then, as a result of the verification, if it is specified that the t value calculated based on the hypothesis of $\beta_i = 0$ occupies the position within the significant level of 5%, the hypothesis of $\beta_i = 0$ will be rejected. More specifically, here, partial regression coefficient $\beta_i$ pertaining to explanatory variable $x_{ij}$ is statistically significant, and it is determined that the factors employed in explanatory variable $x_{ij}$ are contributing to the explanation of target variable $Y_j$. Incidentally, the criteria for determining the significance of the explanatory variable is not limited to only the t value, and this may be determined with the p value which represents the probability of the t value exceeding the significant level with an absolute value.

Next, at step S1381, the contribution ratio in relation to target variable $Y_j$ of the respective factors (explanatory variables) is calculated. The contribution ratio is calculated by dividing the standard partial regression coefficient of the respective factors calculated at step S1377 by the total standard partial regression coefficients of the respective factors. And, thereafter, the calculated value is displayed as a percentage.

Finally, at step S1383, the adaptation of the multiple regression equation employing the analysis according to an embodiment of the present invention is verified. The determination coefficient is used as the scale for verifying the adaptation of the multiple regression equation. A determination coefficient is an index representing to what degree of the provided multiple regression equation is able to explain the fluctuation of the observed value of the target variable. Here, fluctuation is the variation from the average value of the respective points. The determination coefficient is represented with $R^2$, and is calculated by dividing the fluctuation of the theoretical value of target variable $Y_j$ derived from the multiple regression equation by the fluctuation of the observed value of $Y_j$. Specifically, this is as per Formula 8 below.

$$\text{Determination Coefficient } R^2 = \text{Fluctuation of Theoretical Value of } Y_j / \text{Fluctuation of Observed Value of } Y_j \quad \cdots \text{ (Formula 8)}$$

Nevertheless, the value of determination coefficient $R^2$ representing the adaptation of the multiple regression equation will increase pursuant to the increase of the explanatory variable. Although this appears to apply favorably, this does not necessarily mean that the power of explanation of the multiple regression equation is high. Thus, in order to supplement the defect of this determination coefficient $R^2$, the adaptation of the multiple regression equation is verified with determination coefficient $R^{2'}$ of a corrected degree of freedom. Determination coefficient $R^{2'}$ flexibility corrected is a value obtained by giving consideration not only to the explanatory variable for determining the multiple regression equation, but also to the number of variables output as samples, and thereby adjusting the determination coefficient $R^2$.

Further, the flexibility (degree of freedom) is a value obtained by subtracting the average value calculated from the sample from the number of samples. For instance, when the number of samples is N, if one average value is determined, the final sample among the N samples will be automatically determined, and the value that may be freely selected among the output samples will be N - 1 samples.

FIG. 15 is a list of the results for the performed multiple regression analysis. The list is constituted from the values of the partial regression coefficient, standard partial regression coefficient, determination (shows on what % of significant level it is based), t value (calculated by partial regression coefficient/standard error), and standard error (shows the standard deviation of the partial regression coefficient) calculated for each of the 2 factors that are extracted. Further, the calculation results for the determination coefficient $R^{2'}$ of a corrected degree of freedom.

Foremost, the adaptation of the multiple regression equation adopted upon performing the analysis is viewed. Determination coefficient $R^{2'}$ flexibility corrected is 0.7168, and this shows that that adopted multiple regression equation has a high degree of explanation.

Next, whether each of the factors is statistically significant is viewed. According to the calculation result of t value, it is evident that factor 1 (intellectual asset stock) and factor 2 (productivity) are statistically significant. In addition, the determination that the foregoing factors are statistically significant even when verified at a significant level of 1% is shown.

And, at step S1385, based on the foregoing analysis, a relationship diagram showing the relation of the profit related index ROA β and factors showing the statistical significance, and the relationship of these factors and the various indexes constituting such factors is created. The created relationship diagram is stored in the internal database 30A.

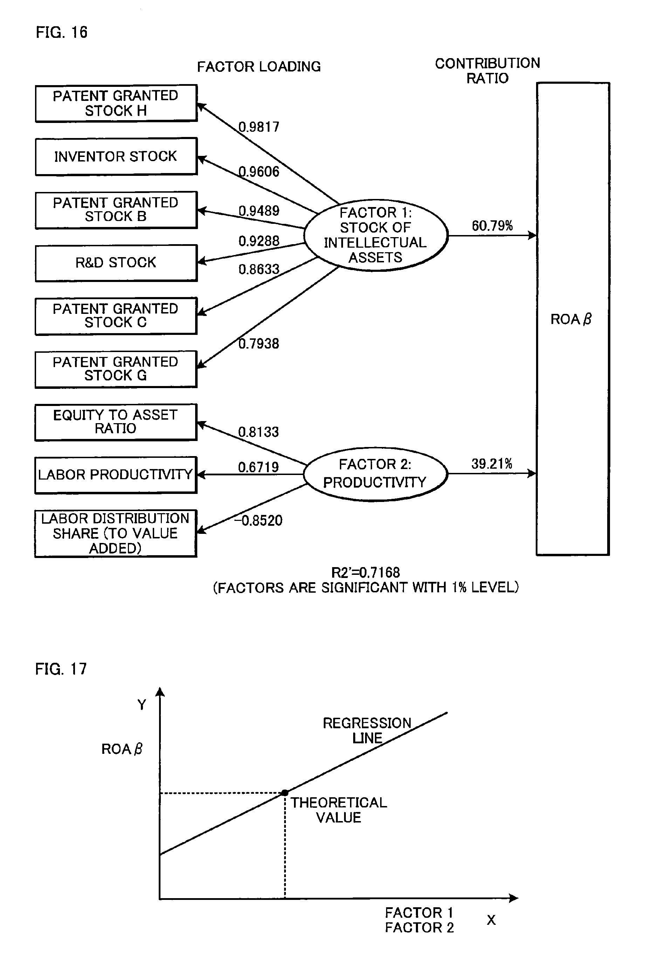

FIG. 16 shows the created relationship diagram. In this relationship diagram, ROA β, factors showing statistical significance, and indexes constituting the respective factors are shown, and the contribution ratio and factor loading based on the standard partial regression coefficient are indicated above the arrows. According to this relationship diagram, with respect to the contribution ratio of factors in relation to ROA β, it is evident that factor 1 (intellectual asset stock) is high at 60.79%. Further, among the indexes constituting factor 1 (intellectual asset stock), a positive value is shown for all of the indexes the patent granted stock by International Patent Classification (IPC) sub class (C, G, B, H), inventor stock, and R&D stock. It is evident, therefore, that increasing the totals for these indexes and enlarging the scale of intellectual asset stock will contribute to increasing company profitability.

Further, factor 2 (productivity) has the next highest contribution ratio in relation to ROA β at 39.21% after factor 1. Further, in the indexes constituting factor 2 (productivity), it is evident that the labor distribution share is acting to lower the productivity. Therefore, it is evident that appropriately suppressing the labor distribution share will contribute to improving company profitability by raising the equity to asset ratio, promoting technical innovation that show labor productivity, and improving management efficiency.

Returning again to the flow chart showing the processing steps for the after-tax business income theoretical value calculation shown in FIG. 11, in step S139 the theoretical value of ROA β of the company targeted for theoretical stock price calculation is calculated. In order to perform this calculation, foremost, a regression line is derived in which factor 1 (intellectual assets stock) and factor 2 (productivity), which had a high contribution ratio in relation to ROA β, are made to be independent variables, and ROA β employed in the target variable is made to be a dependent variable.

The regression line is derived by on the formula shown In Formula 9 below.

$$Y = 17.0283 + 6.1637 \times \text{factor 1 (intellectual assets stock)} + 3.8751 \times \text{factor 2 (productivity)} \qquad \cdots \text{(Formula 9)}$$

Y is the theoretical value of the dependent variable ROA β. 17.0283 is a constant, 6.1637 and 3.8751 are both partial regression coefficients of factors 1 and 2 selected as independent variables. These numerical values are values calculated from the above multiple regression analysis results, and use the same values as the numerical values shown in the list of analysis results in FIG. 15. FIG. 17 is a graph of the regression line representing the relationship of factor 1, factor 2, and theoretical value of ROA β. The theoretical value of ROA β is sought with a point on this regression line.

Incidentally, when factor analysis is not performed at step S133, multiple regression analysis is performed at step S137 based on the index data acquired at step S131. Here, an index having a high contribution ratio in relation to target variable ROA β is selected, the selected index is made to be an independent variable, and ROA β is made to be a dependent variable upon deriving the regression line. Further, the method of calculating the theoretical value of ROA β at step S139 is not limited to factor analysis or multiple regression analysis. For instance, covariance structure analysis may also be employed to calculate the theoretical value of ROA β.

Next, at step S141, the gross business income theoretical value of the company targeted for theoretical stock price calculation is calculated. The gross business income theoretical value is sought by multiplying the total assets of the company to the theoretical value of ROA β once again.

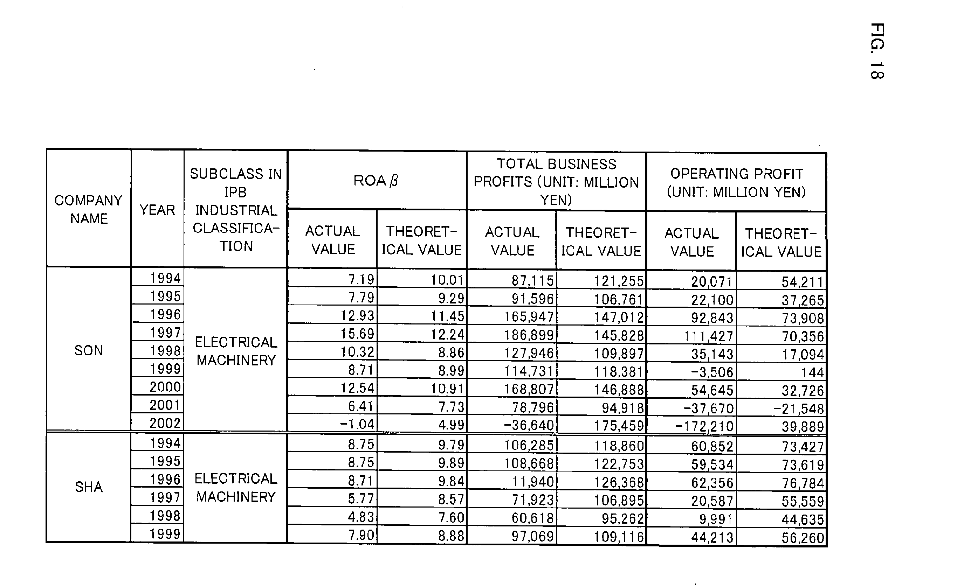

Next, at step S143, the operating profit theoretical value of the company targeted for theoretical stock price calculation is calculated. Incidentally, this operating profit theoretical value is a theoretical value of a value including the patent royalty income. The operating profit theoretical value is sought by deducting the R&D cost book value from the gross business income theoretical value. FIG. 18 is a list representing the calculation results of the actual values and theoretical values including of the ROA β, gross business income, and operating profit (including patent fees and other royalty income) by fiscal year of the theoretical stock price calculation target company.

Next, at step S145, the theoretical stock price calculation target company's after-tax operating profit theoretical value is calculated. The after-tax operating profit theoretical value is calculated by deducting the corporate tax from the operating profit theoretical value including the patent royalty income. Specifically, this is as shown in Formula 10 below.

$$\text{After-tax Operating Profit Theoretical Value = Operating}$$
$$\text{Profit Theoretical Value (Including Patent Royalty Income)} \times$$
$$\text{(1 - corporate tax rate)} \qquad \cdots\text{(Formula 10)}$$

Next, at step S147, the value of the R&D cost to be added back to the after-tax operating profit theoretical value is calculated. At present, the R&D cost is collectively accounted as expenses. Nevertheless, R&D is conducted for the purpose of increasing profits with the subsequent commercialization and merchandizing. Thus, it would be appropriate to deem the portion of the R&D cost contributing to the profit of companies as assets, and not expenses. Therefore, expenses in R&D will be deemed as an investment, and losses that do not function as assets will be calculated as annual depreciation costs as with other fixed assets. And, by deducting the calculated depreciation costs, the remaining R&D cost after depreciation (hereinafter referred to as "R&D cost after depreciation") will be calculated as the deemed asset amount of the R&D cost.

As the first method for calculating depreciation expense, there is an approach based on a macro corporate valuation. With this approach, foremost, the intellectual asset productivity that shows the ratio of intellectual assets generated as output from the R&D funds invested as input are calculated. Next, the intellectual asset profitability that shows the degree of results obtained from utilization of the generated intellectual assets is measured. Then, the calculated intellectual asset profitability is compared to the intellectual asset productivity, and if the value of the intellectual asset profitability is markedly lower or higher compared to the value of the intellectual asset productivity, there is a strong possibility that a different factor is included in the results based on the R&D activities, so the intellectual asset profitability is adjusted to a suitable level. After this, the R&D efficiency is found by dividing the total for the calculation results for the intellectual asset profitability expected to be generated during a future period by the total R&D investment amount invested during the entire period. Then the depreciation expense is calculated using formula 11 shown below based on the R&D efficiency found in this manner.

$$\text{Depreciation expense = (1 - R\&D efficiency)} \times \text{R\&D}$$
$$\text{investment amount} \qquad \cdots\text{(Formula 11)}$$

Here, an example of the depreciation expense calculation method based on the macro company valuation approach is shown. First, the intellectual asset productivity is calculated based on the following formulas 12 through 14.

$$\text{Patent application productivity = annual number of claims}$$
$$\text{filed of the year n/annual R\&D cost of the year (n-1)}$$
$$\cdots\text{(Formula 12)}$$

$$\text{Examination request productivity} = \text{Patent application productivity} \times \text{Estimated examination request ratio}$$

···(Formula 13)

$$\text{Patent acquisition productivity} = \text{Patent application productivity} \times \text{Estimated registration ratio}$$    ···(Formula 14)

The patent application productivity is an index for measuring the productivity in generating patents, which is one aspect of the results of R&D, by finding the number of claims filed per 1 R&D cost unit. It is considered that the higher this value, the greater the number of inventions generated by R&D and the higher the productivity for generating inventions.

The examination request productivity is an index where the above-mentioned patent application productivity has been corrected by the estimated examination request ratio. The estimated examination request ratio shows the ratio with which examination requests are made for all patent applications during an arbitrary year. As a specific calculation method, the number of examination requests made in relation to all patent applications for an arbitrary number of years is tabulated by each year. Next, the number of examination requests for each year is tabulated up to the 3rd (or 7th) year from the respective year (hereinafter referred to as "cumulative number of examination requests." Then, this cumulative number of examination requests is divided by the total number of patent applications for each respective year to calculate the examination request ratio, and then this examination request ratio is used as the estimated examination request ratio.

As an index that shows the intellectual asset productivity, the examination request productivity can be used as a substitute for patent application productivity. The reason for this is that since patents are not examined until an examination request has been made, if after patent application the desire to obtain the patent is lost, then the application will be withdrawn without ever making an examination request. For this reason, just using patent application productivity based on the number of claims filed is, in the strict sense of the meaning, can be considered to not be a reflection of intellectual asset productivity.

Patent acquisition productivity is an index where the patent application productivity is corrected using the estimated patent granted ratio. The estimated patent granted ratio is the rate obtained by tabulating for each year the number of registrations corresponding to the total number of patent application for the respective years, calculating the patent granted ratio, deriving a regression line using this patent granted ratio for the explained variable and the number of years for the explaining variable, and then substituting in the regression line the average number of years required for registration of the respective companies. In the embodiment of the present invention, the number of past patent applications for the respective companies that have been registered is used for the estimate. As an index that shows the intellectual asset productivity, this patent acquisition productivity can be used as a substitute for patent application productivity. Patent acquisition productivity shows the intellectual asset productivity that has been corrected using the estimated rate of final patent acquisition, and, in the strictest sense of the meaning, this is considered to show the productivity in generating intellectual assets through R&D.

Next, the intellectual asset profitability is calculated based on the following formulas 15 through 17.

$$\text{Total factor productivity} = \text{Value added amount rate of change} - \{(1 - \text{Labor distribution share}) \times \text{Rate of change of tangible fixed assets subject to depreciation}\} - (\text{Labor distribution share} \times \text{Number of employees rate of change})$$

$$\cdots (\text{Formula 15})$$

$$\text{Market value added} = \text{Total number of outstanding shares} \times \text{Stock price} - \text{Shareholder's equity} \qquad \cdots (\text{Formula 16})$$

$$\text{Gross business income} = \text{Operating profit} + \text{R\&D cost} + \text{Patent fees and other royalty income} \qquad \cdots (\text{Formula 17})$$

Total factor productivity is an index that measures the rate of change of the technology progress rate by subtracting the capital and human resource investment amount rate of change from the value added amount rate of change. The portion of the increase in the value added amount, which shows the value generated by a company using internal production elements, that was not the result of increase in the investment amount in the production elements of plant and labor is considered to be the result of technical innovation. Further, the technical innovation that contributes to increasing this added value is considered to be the result obtained by utilizing the intellectual assets generated by R&D. Therefore, the total factor productivity is considered to be one of the indexes for intellectual asset profitability that shows the degree of results obtained by utilizing the intellectual assets generated as the result of R&D. Note that the excess profit related indexes shown in FIG. 5, such as excess ROA, may be used as a substitute index for the total factor productivity.

In addition, as an index that shows intellectual asset profitability, market value added may be used as a substitute for total factor productivity. Market value added is off-balance company valuation amount found by subtracting the shareholder's equity from the aggregate market value, which is the company valuation amount in the market. The market value added is considered to be the intellectual asset valuation amount for a company acquired in the market through the utilization of intellectual assets generated through the R&D of the company.

Further, as an index that shows intellectual asset profitability, gross business income may be substituted for the above-mentioned two indexes. Gross business income, as stated previously, is the profit amount found by adding back the R&D cost processed as an expense to the operating profit and by adding the patent fees and other royalties. Gross business income is considered to show the overall business income obtained by a company utilizing the intellectual assets generated through R&D in manufacturing and sales activities. Note that gross operating profit, which is the operating profit before R&D cost is deducted, may be used as a substitute index for the gross business income.

Next, the calculated intellectual asset profitability is compared to the intellectual asset productivity. In regards to the index that shows intellectual asset profitability, it is not possible to completely remove all elements differing from results generated as from utilization of intellectual assets based on R&D activities that get mixed into the index, such as arbitrary market trends and performance from financial strategies. Therefore, making a comparison with intellectual asset productivity, which is an index that shows results based on pure R&D activities, is required to adjust the intellectual asset profitability to a suitable value.

Here, for example, if the value of intellectual asset profitability is markedly lower than that of intellectual asset productivity, rather than there being a qualitative problem with the intellectual assets, there is considered to be other factors that are hindering an increase in intellectual asset profitability. Therefore, intellectual asset profitability must be adjusted to a suitable level after identifying the hindering factors and loss amount. In addition, conversely, if the intellectual asset profitability is markedly higher than the intellectual asset productivity, an adjustment must be made to reflect in the intellectual asset profitability just the excess profit portion originating from the quality of the intellectual assets after distinguishing whether there is excess profit originating from the quality of the intellectual assets or if profit is acquired based on factors separate from intellectual assets.

After adjusting intellectual asset profitability, the R&D efficiency is found by dividing the total calculated results for the intellectual asset profitability expected to be generated during a future period by the total amount of R&D investment for the entire investment period. Specifically, this is as shown by the following formula 18.

$$\text{R\&D efficiency} = \Sigma_{t=1}^{n} \text{ intellectual asset profitability}$$

$$_{t} / \Sigma_{t=0}^{n} \text{ R\&D investment amount }_{t} \qquad \cdots \text{(Formula 18)}$$

By using the R&D efficiency obtained from the above formula 18, the depreciation expense is calculated from the above formula 11.

A second method for calculating depreciation expense is the approach based on micro patent information analysis. With this approach, foremost, the number of patent applications and the detailed contents of those applications are analyzed for each patent and other intellectual asset possessed by a company. Next, based on these results, the competitive power positioning in the patent or technology development competitive market of the individual patent and other intellectual assets possessed by a company is identified. Then, the competitive power of these patent and other intellectual assets in said market is converted into an index that is used to calculate the depreciation expense for each respective patent or other intellectual asset. Finally, the depreciation expense for each patent or other intellectual asset are totaled, and this is used to calculate the depreciation expense for the entire company.

Here, an example of the method for calculating depreciation based on micro patent information analysis is shown. First, each of the patents and other intellectual assets possessed by a company are classified by each patent application using the International Patent Classification (hereinafter referred to as "IPC") sub class. Next, the number of patent applications by IPC sub class is tabulated. Further, the R&D investment amount invested by each company is tabulated by IPC sub class.

After the above tabulation work is performed, first, the market status by IPC sub class is calculated based on the following formula 19 to assess the technical development competitive situation for each IPC sub class classification.

$$\text{Market status} = \Sigma \text{ (Number of claims filed by company by}$$

$$\text{IPC sub class/total number of claims filed of all}$$

$$\text{participating companies)}^{2} \qquad \cdots \text{(Formula 19)}$$

The above-mentioned formula 19 assesses Herfindahl index value calculated for each IPC sub class as technical development competitive situation of the market. Here, the Herfindahl index is the abbreviation for the Hirschman-Herfindahl Index, which is a technique for measuring the degree of concentration in a specific product market. The Herfindahl index is found using the sum of the squared values of the shares held by each company participating in the market. Therefore, if one company has a complete monopoly, the numerical value will be 10,000, and the stiffer the competition, the lower this numerical value will be. More specifically, for example, even if a company has the top share of a certain IPC sub class, if a low Herfindahl index value is shown, there is a stiff technical development situation in the market, and it is apparent the positioning (status) of that company is not fixed.

Note that an embodiment of the present invention employs the number of claims filed as an index for measuring the shares held by the respective companies, but this is not limited to being an index for measuring share. Further, an embodiment of the present invention simply sums the number of claims filed, but the share for the number of claims filed may be found by analyzing in detail the contents of patent applications for each invention, scoring for each claim the number of independent claims, number of invention factors showing the invention ratio in independent claims, number of invention effective factors enjoining the technical effectiveness to the number of invention factors, number of request effective factors taking into consideration the existence of prior and subsequent patent applications in the number of invention effective factors, novelty, non-obviousness, rights generation prospects, etc., and then summing the number of claims filed after weighting them.

Next, the company share for each IPC sub class is calculated based on the following formula 20 to assess the positioning (status) of respective companies in a technology development competitive market for each IPC sub class.

```
    Company share by IPC sub class = Number of claims filed for each company by IPC sub class/Total number of claims filed of all participating companies      ···(Formula 20)
```

The number of claims filed is the number of inventions included in the patent application, and a large number of claims filed means a large number of inventions. The reason for basing the calculation on the number of claims filed rather than the number of patent applications is to take into consideration the recent trend of companies to consolidate related inventions into a single patent application to reduce patent application costs. Further, this removes the arbitrary element of increasing the number of patent applications by individually applying for each invention representing minor improvements. Additionally, the scale of patent applications differs among industries, having a larger number of claims filed does not necessarily mean a company has greater technical development capability. Therefore, looking at the share for the number of claims filed for respective companies in accordance with the IPC sub class technical classifications makes it possible to compare companies within the same industry for the same technical field without being affected by the difference in the scale of the number of claims filed among industries.

Next, the competitive position index of the respective companies is calculated by IPC sub class based on the following formula 21 to assess the competitiveness in the technology development competitive market of the respective companies for each IPC sub classification.

```
    Competitive position index by company by IPC sub class = Market status by IPC sub class × Company share by IPC sub

    class ···(Formula 21)
```

The competitive position index by IPC sub class is calculated by multiplying the market status by IPC sub class calculated using the above-mentioned formula 19 by the company share by IPC sub class calculated using the above-mentioned formula 20. More specifically, the competitive position index by IPC sub class uses the competitive situation in each IPC sub class (if monopolistic or competitive) and the share of the number of claims filed of respective companies so as to measure the degree of technology development competitive position in each IPC sub class from the perspective of the patent applications of respective companies.

Next, the R&D status by IPC sub class is calculated based on the following formula 22 to assess the status of R&D investment amount by IPC sub class.

```
    R&D status = Σ (R&D investment amount by company by IPC sub class/total R&D investment amount of all participating

    companies)² ···(Formula 22)
```

The calculation of R&D status by IPC sub class employs the Herfindahl index in line with the calculation of the market status by IPC sub class. Employing the Herfindahl index makes it possible to measure the degree of uneven distribution among companies of the total R&D investment amount invested for entire IPC sub classes.

Next, the share by company of the R&D investment amount by IPC sub class is calculated based on the following formula 23 to assess the positioning (status) of the R&D investment amount of respective companies for each IPC sub class classification.

$$R\&D \text{ investment amount share by company} = R\&D \text{ investment amount by company by IPC sub class/Total R\&D investment amount for all participating companies} \quad \cdots (\text{Formula 23})$$

The reason the R&D investment amount share for respective companies is calculated to assess the R&D investment amount status by company is that the scale of the R&D investment amount differs among industries, so just looking at the R&D investment amount will not necessarily make it possible to determine if the company R&D investment trend is high. Looking at the R&D investment amount share by company for the IPC sub class technical classification makes it possible to compare the same technologies within the same industry to eliminate the affect from the difference in scale of the R&D investment amount among industries.

Next, the R&D investment index by company by IPC sub class is calculated by multiplying the R&D status by IPC sub class calculated using the above-mentioned formula 22 by the R&D investment amount share by company calculated using the above-mentioned formula 23. More specifically, this is as shown by the following formula 24.

$$R\&D \text{ investment index by company by IPC sub class} = R\&D \text{ investment status by IPC sub class} \times R\&D \text{ investment amount share by company} \quad \cdots (\text{Formula 24})$$

The R&D investment index by IPC sub class measures the degree of focus on R&D by company by IPC sub class by employing the R&D investment trend in each IPC sub class (whether it is concentrated in a few companies or dispersed) and the R&D investment amount share of each company.

Next, the R&D efficiency by IPC sub class for the respective companies is calculated by dividing the competitive position index by company by IPC sub class calculated using the above-mentioned formula 21 by the R&D investment index by company by IPC sub class calculated using the above-mentioned formula 24. More specifically, this is as shown by the following formula 25.

$$R\&D \text{ efficiency by company by IPC sub class} = \text{Competitive position index by company by IPC sub class/R\&D investment index by company by IPC sub class} \quad \cdots (\text{Formula 25})$$

Next, the depreciation expenses by IPC sub class for the respective companies is calculated based on the results of the R&D efficiency of the respective companies calculated for each IPC sub class. More specifically, this is as shown by the following formula 26.

$$\text{Depreciation expense by company by IPC sub class} = (1 - R\&D \text{ efficiency by company by IPC sub class}) \times R\&D \text{ investment amount by company by IPC sub class} \quad \cdots (\text{Formula 26})$$

Finally, the depreciation expense by company by IPC sub class calculated based on the above-mentioned formula 26 is calculated for all IPC sub classes for which the company have made patent applications. Further, the depreciation expense calculated for the respective IPC sub classes is totaled to calculate the total depreciation expense for the company. More specifically, this is as shown by the following formula 27.

$$\text{Total depreciation expense} = \Sigma \ (\text{depreciation expense by}$$

$$\text{company by IPC sub class}) \qquad \cdots (\text{Formula 27})$$

Note that the classification method for the technology development competition market to which the various patent and other intellectual assets belong is not limited to the IPC sub class. Alternatives other than the IPC sub class are, for example, classifications by IPC section, class, or main group; or by US Patent Classification (UPC); or by US Standard Industrial Classification (SIC), etc.

Returning again to the flow chart in FIG. 11 showing the processing steps for calculating the after-tax business income theoretical value, at step S149, the after-tax business income theoretical value is calculated. The after-tax business income theoretical value is found by adding the R&D cost deemed as the asset amount calculated at step S147 to the after-tax operating profit theoretical value. Note that according to an embodiment of the present invention the depreciation expense is not deducted on the assumption that a loss does not occur accompanying R&D.

Further, the after-tax business income theoretical value according to an embodiment of the present invention employs an average value of three terms of the after-tax operating profit theoretical value (including patent fees and other royalty income) and R&D cost. Nevertheless, the length of the term to be adopted is not limited to the above, and an arbitrary period may be set.

After calculating the after-tax business income theoretical value, the routine returns once again to FIG. 3, and at step S15, the investment capital cost of the company is calculated. The investment capital cost is the total amount of funds invested in a company's business activities. The invested capital cost calculation methods include among others a financial approach that focuses on the liabilities and capital that are the resource of funds procurement for a company, and the operations approach that focuses on assets as the funds management of a company.

No matter which approach is used to calculate the investment capital cost, the investment capital cost is calculated based on the weighted average cost of capital (WACC). There are two types of investors for companies, namely: debt investors and stock investors. Debt investors, such as bond investors and financial institutions, seek a return commensurate with the debt investment. On the other hand, stock investors expect to receive a high return commensurate with the risk they assume. Therefore, the company's cost of capital is the average of the debt investor cost of capital and the stock investor cost of capital. Further, the ratio between the liabilities and the shareholders' equity, specifically the debt to capital composition, differs depending on the company. For this reason, to calculate the cost of capital of the respective companies requires that the debt and shareholder capital cost be adjusted by weighting and then averaged. For this reason, the weighted average cost of capital (WACC) is employed to calculate the investment capital cost.

WACC is an abbreviation of the Weighted Average Cost of Capital, and represents the minimum amount of return requested by the funds provider. Here, weighted average is the act of weighting and averaging the costs arising in connection with debt and shareholders' equity as a funds procurement resource of companies. The calculation formula of the weighted average cost of capital (WACC) is as shown in Formula 28 below.

$$\text{Weighted Average Cost of Capital (WACC)} = (\text{Market Value}$$

$$\text{of Interest Bearing Debt/Market Value of Company}) \times \text{Debt Cost}$$

$$\times \ (1 - \text{corporate tax rate}) + (\text{Market Value of Stock/Market}$$

$$\text{Value of Company}) \times \text{Shareholders' Equity Cost} \qquad \cdots (\text{Formula 28})$$

In regards to the weighting of interest bearing debt and shareholders' equity for the market value of a company, generally a target value is applied. Further, for the debt cost, the interest calculated based on the historic rate or rating for the company is applied. Also, for the costs of shareholders' equity, generally the value calculated based on the capital asset pricing model (CAPM) or arbitrage pricing model (APM) is applied.

Next, the calculated weighted average cost of capital (WACC) is multiplied by the investment capital of the company to calculate the investment capital cost. The investment capital cost formula is as shown by the following formula 29.

$$\text{Investment capital cost} = (\text{Interest bearing debt} + \text{Equity capital}) \times \text{weighted average cost of capital (WACC)} \cdots (\text{Formula 29})$$

The above-mentioned formula 29 is an investment capital cost formula that employs a financial approach that focuses on the interest bearing debt and the shareholders' equity as capital procurement resources of the company. The equity capital employed in the calculation of the investment capital cost uses either the amount based on the book value or the amount based on the market value. An embodiment of the present invention employs an amount based on the book value for equity capital to balance the calculation of the interest bearing debt based on the book value.

Note that the method of calculating the investment capital cost is not limited to Formula 29 described above. For example, regarding the calculation method based on an operations approach that focuses on the assets possessed by a company, a method for calculating the investment capital cost by multiplying the WACC by the operating capital and tangible fixed assets of a company. An investment capital cost calculation formula based on an operations approach is as shown below in formula 30.

$$\text{Investment capital cost} = (\text{Operating capital} + \text{tangible fixed assets}) \times \text{weighted average cost of capital (WACC)} \cdots (\text{Formula 30})$$

Operating capital is the amount obtained by subtracting the current liabilities balance from the current assets balance, and in the strict meaning is the amount obtained by deducting the inventory accounts payable from the sum of accounts receivable and inventory assets. Further, tangible fixed assets are assets held for the use over the long term, and are assets that have a physical form, such as land and buildings.

If the operating capital is compressed, cash flow is improved and short-term borrowing can be reduced. Further, if tangible fixed assets are compressed, long-term borrowing can be reduced. In this way, changes to operating capital and tangible fixed assets are closely related to changes in short-term borrowing, long-term borrowing, and shareholders' equity. In addition, the composition of operating capital and tangible fixed assets differs depending on the company. For this reason, even when calculating the investment capital cost based on the operations approach, it is desirable that the capital cost be weighted averaged using the WACC in line with the financial approach.

Further, in addition to the method for calculating the investment cost of capital based on a financial approach or an operations approach, there is a method that calculates the theoretical expected earnings that should be obtained from the financial assets and tangible fixed assets and substitutes this for the investment capital cost. The method for calculating the expected earnings on the financial assets and tangible fixed assets is as shown in the following formula 31.

$$\text{Expected earnings} = (\text{Financial assets} \times \text{profitability m}) + (\text{Tangible fixed assets} \times \text{profitability f}) \quad \cdots (\text{Formula 31})$$

Here, the financial assets is the average of the values from the beginning to the end of the period obtained by subtracting the current liabilities from the current assets as shown on the balance sheet. Note that this period is not limited to that stated above but that the period can be freely set accompanying the purpose of the analysis or the nature of target.

Further, for the tangible fixed assets the average of the values from the beginning to the end of the period of the tangible fixed assets shown on the balance sheet is used. As with the financial assets, this period is not limited to that stated above but that the period can be freely set accompanying the purpose of the analysis or the nature of target. The profitability m applies the short-term prime rate. The short-term prime rate is the preferential interest rate applied to short-term loans to companies in good standing by commercial banks. Also, the profitability f apples the long-term prime rate. The long-term prime rate is the preferential interest rate applied to long-term loans to companies in good standing by long-term credit banks, trust banks, and similar institutions. Note that the long or short term interest rate that is applied to profitability is not limited to that mentioned above and the interest rate can be freely set accompanying the purpose of the analysis or the nature of target.

As described above, the methods for calculating the investment capital cost were explained for the method that multiplies the weighted averaged cost of capital (WACC) by the sum of the book values of the interest bearing debt and the equity capital; the method that multiplies the weighted averaged cost of capital (WACC) by the sum of the book value of the interest bearing debt and the market value of the equity capital; and the method that multiplies the weighted averaged cost of capital (WACC) by the sum of the operating capital and the tangible fixed assets were explained. Further, in addition to the calculation of investment capital cost, a method for calculating the expected earnings from financial assets and tangible fixed assets was also explained. The methods described above can all be freely set depending on the purpose of the analysis or the nature of target.

Next, at step S17, the economic profit theoretical value is calculated by deducting the investment capital cost calculated at step S15 from the after-tax business income theoretical value. The calculation formula of the economic profit theoretical value is as shown in Formula 32 below.

$$\text{Economic profit theoretical value} = \text{After-tax business income theoretical value} - \text{Investment capital cost}$$

$$\cdots \text{ (Formula 32)}$$

The investment capital cost of the above-mentioned formula 32 is calculated by multiplying the weighted average cost of capital (WACC) by the sum of the book values of the interest bearing debt and the equity capital. Here, the economic profit theoretical value is the remaining profit theoretical value after the investment capital cost is subtracted from the after-tax business income theoretical value. The economic profit theoretical value can be considered to show the total theoretical value of the economic profit generated by operations. Further, the economic profit theoretical value can be viewed as the excess profit generated by on-balance (balance sheet) investment capital, so it can be substituted for the company expected earnings.

Note that the residual profit theoretical value found when using the amount calculated by multiplying the weighted average cost of capital (WACC) by the sum of the book value of the interest bearing debt and the market value of the equity capital as the investment capital cost is called the theoretical economic excess profit. Further, the residual profit theoretical value found when using the amount calculated by multiplying the weighted average cost of capital (WACC) by the sum of the operating capital and tangible fixed assets as the investment capital cost is called the before R&D cost deduction business income theoretical value after deduction of taxes and asset costs (after-tax intellectual asset profit, $\beta$ theoretical value). These theoretical value definitions and formulas are as shown in FIG. 4.

In addition, the residual profit theoretical value calculated by subtracting the expected earnings on financial assets and tangible fixed assets from the after-tax business income theoretical value is called the intellectual asset profit theoretical value. Since the intellectual asset profit theoretical value obtained by deducting from the after-tax business income theoretical value the expected earnings to be obtained from the on-balance (balance sheet) assets is a profit that cannot be explained from the on-balance (balance sheet) assets, it can be hypothesized to be a profit amount theoretical value generated by off-balance intangible asset resources represented by patents and other intellectual assets.

Next, at step S19, the discount rate is calculated. A discount rate is a type of interest for calculating the future profits of the company upon returning them to the present value. The discount rate is calculated based on a capital asset pricing model (CAPM). CAPM is the abbreviation of Capital Asset Pricing Model, and is a model for showing that there is a quantitative relationship for balancing the supply and demand between the risk assets and expected profit ratio. CAPM is calculated by adding a value obtained by multiplying coefficient ($\beta$) representing the stock price range of individual companies with a value obtained by deducting the risk-free rate of risk-free assets from the profit ratio of the stock market, and the risk-free rate of risk-free assets. The discount rate calculation formula based on CAPM is as shown in Formula 33 below.

$$\text{Discount Rate (CAPM) = Risk-free Rate of Risk-free Assets}$$
$$+ \ \beta \times \text{(Profit Ratio of Stock Market - Risk-free Rate of Risk-}$$
$$\text{free Assets)} \qquad \qquad \cdots \text{(Formula 33)}$$

Next, at step S21, the theoretical market value added is calculated. The theoretical market value added is the theoretical value of the valuation amount in the market for the off-balance intangible assets of a company. More specifically, the theoretical market value added is the difference between the company's potential market value and equity capital book value, and represents the value deemed to be generated beyond the capital invested in the company. The theoretical market value added is found by dividing the economic profit theoretical value of a future period by the discount rate (CAPM) calculated at step S19. Further, the theoretical market value added found in this way is equivalent to the sum of the current values of the economic profit theoretical value. The calculation formula of the theoretical market value added is as shown in Formula 34 below.

$$\text{Theoretical Market Value Added = Economic Profit}$$
$$\text{Theoretical Value/Discount Rate} \qquad \cdots \text{(Formula 34)}$$

Next, at step S23, the company's equity capital is calculated. Equity capital is the shareholders' equity account name in the balance sheet; more specifically, the net assets of the company. The equity capital calculated as the average value of 3 terms is used in an embodiment of the present invention.

Next, at step S25, the estimated aggregate market value is calculated. The estimated aggregate market value is found by adding the average value of 3 terms of equity capital calculated at step S23 to the theoretical market value added. The calculation formula of the estimated aggregate market value is as shown in Formula 35 below.

$$\text{Estimated Aggregate Market Value = Theoretical Market}$$
$$\text{Value Added + Equity Capital (Average of 3 Terms)} \cdots \text{(Formula 35)}$$

Next, at step S27, the theoretical stock price is calculated. The theoretical stock price is calculated by dividing the calculated estimated aggregate market value by the total number of outstanding shares acquired from the internal database 30A. The calculation formula of the theoretical stock price is as shown in Formula 36 below.

$$\text{Theoretical Stock Price = Estimated Aggregate Market}$$
$$\text{Value/Total Number of Outstanding Shares}$$
$$\cdots \text{(Formula 36)}$$

Incidentally, the calculation method of the theoretical stock price is not limited to the embodiments of the present invention. For example, a method of calculating the estimated aggregate market value by deducting the amount of debt from the discounted present value of future profits of the company, and dividing this by the total number of outstanding shares so as to obtain the theoretical stock price may also be employed. Or, it is also possible to calculate the theoretical stock price based on the dividends of stock. Any of these methods may be arbitrarily selected according to the objective of calculation and target of calculation of the theoretical stock price. Incidentally, the calculated theoretical stock price is stored in the internal database 30A.

Next, at step S29, the calculation result of the theoretical stock price is displayed on a display screen together with the actual stock price. Further, as necessary the list or graph of the calculation result of the theoretical stock price and price movement data of the theoretical stock price and the actual stock price is output to the printer 31. Note that for an embodiment of the present invention an example of outputting the calculated theoretical stock price to a display means or to a printer has been explained, but the alternatives are not limited to this explanation. The calculated theoretical stock price can also be transmitted online via a communication line.

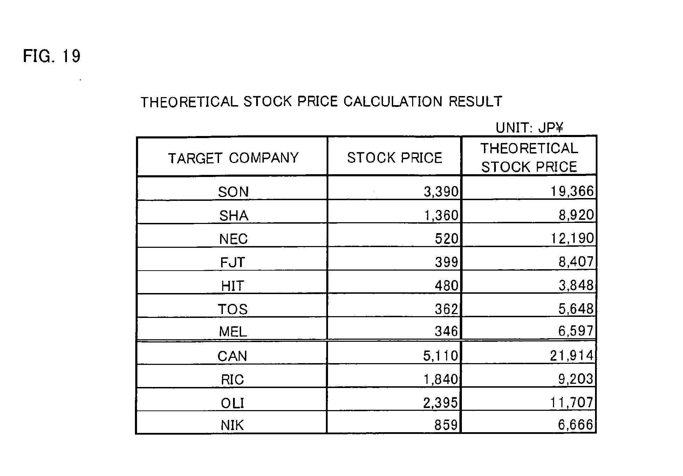

FIG. 19 is a list of the calculation result of the theoretical stock price. In this list, the company name, performance of the actual stock price for a freely specified year, and the calculation results for the theoretical stock price calculated by company are displayed. The theoretical stock prices of an embodiment of the present invention are all shown as a higher value than the actual stock prices. This means that for all of the companies to potential company value is not valued properly by the market, and, thus, the companies are undervalued. Moreover, in light of the above, if there are no problems in areas other than business activities based on the core business of the company, it can be determined that it is highly likely for the stock prices to rise in the future. As a result, the current stock price of a company shown in FIG. 19 is under priced compared to the potential company value of the company, and it can be determined that it is a suitable time to purchase shares of the company.

Thus, a theoretical stock price calculation device according to the present invention uses indexes obtained from patents and other intellectual assets representing off-balance intangible assets and further add data obtained from information concerning the management and finance of companies to comprehensively valuates how the respective companies are creating and operating the trinity management strategy consisting of business strategy, research and development strategy, and intellectual property strategy for increasing the corporate value and to correctly calculate the future expected earnings based on the valuation results and then calculate the theoretical stock price.

For this reason, if the calculated theoretical stock price is higher than the actual stock price, there is a strong possibility the company's stock price will rise in the future, and investors can determine that it is time to buy the stock. Conversely, if the calculated theoretical stock price is lower than the actual stock price, there is a strong possibility the company's stock price will fall in the future, and investors can determine that it is time to sell the stock. In this manner, correctly valuating the potential value of intellectual assets and other off-balance intangible assets and calculating the future expected earnings of a company and using the theoretical stock price obtained from these as a decision-making index makes it possible to function to adjust the actual stock price to a suitable level.

At the same time, to corporate management, a theoretical stock price that is higher than the actual stock price means that although the company has a high potential stock price, the market valuation of the company does not match its value. In such a case, the company must obtain a market valuation that matches the company value while also avoiding becoming a corporate buyout target. Also, for this reason, management can determine that there is a high necessity for taking stock price related action on the issues required by business strategy.

Conversely, if the theoretical stock price is lower than the actual stock price, it means there is a strong possibility foundation of business activities to date have weakened compared to the company's current earnings situation and market valuation. In such a case, the company can determine that there is a high necessity to undertake restructuring of the business structure by reviewing the business activities engaged in to date, redistributing human resources, and the selection of and concentration in technical development fields.

Further, this kind of theoretical stock price computing method can be provided as a service. In addition, by providing the program that controls the theoretical stock price computing device, each client can utilize an individual system to automatically calculate the theoretical stock price.

The theoretical stock price computing device, theoretical stock price computing method, and theoretical stock price computing program according to the present invention perform a comprehensive evaluation of companies based on company valuation indexes, including R&D cost related indexes, management and finance related indexes, and patent and other intellectual asset related indexes for company evaluation, and automatically calculate the theoretical stock price by accurately estimating future expected earnings based on these results.

An objective of the theoretical stock price computing device, theoretical stock price computing method, and theoretical stock price computing program according to the present invention is to provide new indexes for use by investors to determine whether the current stock price of a company being considered for investment is overpriced or under priced by the stock market. And a further objective according to the present invention is to provide new indexes for use by management to determine whether the current stock price of the management's company is over priced or under priced by the stock market.

**Claims**

1. A device that calculates the theoretical stock price of a company based on company valuation indexes, comprising;
   data acquisition means that acquires data concerning company valuation indexes including intellectual assets related indexes;
   expected earnings calculation means that calculates the expected earnings of a company using data concerning company valuation indexes including the intellectual assets related indexes;

discount rate calculation means that calculates the discount rate for deriving company present value using data concerning the company valuation indexes;

estimated aggregate market value calculation means that calculates the estimated aggregate market value of a company by dividing the expected earnings by the discount rate; and

theoretical stock price calculation means that calculates the theoretical stock price by dividing the estimated aggregate market value by the total number of outstanding shares.

2. A device that calculates the theoretical stock price of a company based on company valuation indexes, comprising;

data acquisition means that acquires data concerning company evaluation indexes including intellectual assets related indexes;

after-tax business income theoretical value calculation means that calculates the after-tax business income theoretical value of a company using data concerning company valuation indexes including the intellectual assets related indexes;

investment capital cost calculation means that calculates the investment capital cost of a company using data concerning the company valuation indexes;

economic profit theoretical value calculation means that calculates the economic profit theoretical value by subtracting the investment capital cost from the after-tax business income theoretical value;

discount rate calculation means that calculates the discount rate to derive the current value of a company using data concerning the company valuation indexes;

theoretical market value added calculation means that calculates the theoretical market value added by dividing the economic profit theoretical value by the discount rate;

equity capital calculation means that calculates the equity capital of a company using data concerning the company valuation indexes;

estimated aggregate market value calculation means that calculates the estimated aggregate market value of a company by adding the theoretical market value added to the equity capital; and

theoretical stock price calculation means that calculates the theoretical stock price by dividing the estimated aggregate market value by the total number of outstanding shares.

3. The theoretical stock price computing device of Claim 2, wherein the after-tax business income theoretical value calculation means comprise;

factor analysis means that conducts factor analysis using data concerning the company valuation indexes of multiple companies, extracts factors, and aggregates the company valuation indexes based on said factors;

multiple regression analysis means that performs multiple regression analysis using the factors extracted by the factor analysis means and the earnings related indexes shown by the various earnings, such as the intellectual assets related earnings of multiple companies, and derives a regression line showing the correlation between these;

gross business income theoretical value calculation means that, based on the regression line, calculates the theoretical value of the earnings related indexes of the company that is the theoretical stock price calculation target and that then, based on said theoretical value, calculates the gross business income theoretical value;

operating profit theoretical value calculation means that calculates the operating profit theoretical value by subtracting the book value of the research and development expenses from the gross business income theoretical value;

after-tax operating profit theoretical value calculation means that calculates the after-tax operating profit theoretical value by subtracting the corporate income tax from the operating profit theoretical value;

research and development expense deemed asset amount calculation means that calculates the deemed asset amount of research and development expenses using data relating to company valuation indexes including the intellectual assets related indexes; and

research and development expense deemed asset amount addition means that calculates the after-tax business income theoretical value by adding the research and development expense deemed asset amount to the after-tax operating profit theoretical value.

4. The theoretical stock price computing device of Claim 3, wherein the research and development expense deemed asset amount calculation means comprise;

research and development investment amount data acquisition means that acquires a research and development investment amount data;

depreciation expense calculation means that calculates as depreciation expense the loss portion of the research and development investment amount; and

depreciation expense subtraction means that calculates the research and development expense after depreciation by subtracting the depreciation expense from the research and development investment amount.

**5.** The theoretical stock price computing device of Claim 4, wherein the depreciation expense calculation means comprise;

calculation means based on a macro company evaluation whereby the intellectual assets productivity, which shows the ratio with which intellectual assets is generated by the research and development investment of companies, and the intellectual assets profitability, which shows result rate produced by utilizing the intellectual assets, are measured and the depreciation expense by company is calculated; and/or

calculation means based on patent and other intellectual assets value valuation wherein the competitive power of patents and other intellectual assets of each company is created into an index and the depreciation expense is calculated separately for said patents and other intellectual assets.

**6.** A method for calculating the theoretical stock price of a company based on company valuation indexes, comprising;

a data acquisition step to acquire data concerning company valuation indexes including intellectual assets related indexes;

an expected earnings calculation step to calculate the expected earnings of a company using data concerning company valuation indexes including the intellectual assets related indexes;

a discount rate calculation step to calculate the discount rate for deriving company present value using data concerning the company valuation indexes;

an estimated aggregate market value calculation step to calculate the estimated aggregate market value of a company by dividing the expected earnings by the discount rate; and

a theoretical stock price calculation step to calculate the theoretical stock price by dividing the estimated aggregate market value by the total number of outstanding shares.

**7.** A method for calculating the theoretical stock price of a company based on company valuation indexes, comprising;

a data acquisition step to acquire data concerning company evaluation indexes including intellectual assets related indexes;

an after-tax business income theoretical value calculation step to calculate the after-tax business income theoretical value of a company using data concerning company valuation indexes including the intellectual assets related indexes;

an investment capital cost calculation step to calculate the investment capital cost of a company using data concerning the company valuation indexes;

an economic profit theoretical value calculation step to calculate the economic profit theoretical value by subtracting the investment capital cost from the after-tax business income theoretical value;

a discount rate calculation step to calculate the discount rate to derive the current value of a company using data concerning the company valuation indexes;

a theoretical market value added calculation step to calculate the theoretical market value added by dividing the economic profit theoretical value by the discount rate;

an equity capital calculation step to calculate the equity capital of a company using data concerning the company valuation indexes;

an estimated aggregate market value calculation step to calculate the estimated aggregate market value of a company by adding the theoretical market value added to the equity capital; and

a theoretical stock price calculation step to calculate the theoretical stock price by dividing the estimated aggregate market value by the total number of outstanding shares.

**8.** The theoretical stock price computing method of Claim 7, wherein the after-tax business income theoretical value calculation step comprises;

a factor analysis step to conduct factor analysis using data concerning the company valuation indexes of multiple companies, extract factors, and aggregate the company valuation indexes based on said factors;

a multiple regression analysis step to perform multiple regression analysis using the factors extracted by the factor analysis step and the earnings related indexes shown by the various earnings, such as the intellectual assets related earnings of multiple companies, and derive a regression line showing the correlation between these;

a gross business income theoretical value calculation step, based on the regression line, to calculate the theoretical value of the earnings related indexes of the company that is the theoretical stock price calculation target and then, based on said theoretical value, calculate the gross business income theoretical value;

an operating profit theoretical value calculation step to calculate the operating profit theoretical value by subtracting the book value of the research and development expenses from the gross business income theoretical value;

an after-tax operating profit theoretical value calculation step to calculate the after-tax operating profit theoretical value by subtracting the corporate income tax from the operating profit theoretical value;

a research and development expense deemed asset amount calculation step to calculate the deemed asset amount of research and development expenses using data relating to company valuation indexes including the intellectual assets related indexes; and

a research and development expense deemed asset amount addition step to calculate the after-tax business income theoretical value by adding the research and development expense deemed asset amount to the after-tax operating profit theoretical value.

**9.** The theoretical stock price computing method of Claim 8, wherein the research and development expense deemed asset amount calculation step comprises;

a research and development investment amount data acquisition step to acquire a research and development investment amount data;

a depreciation expense calculation step to calculate as depreciation expense the loss portion of the research and development investment amount; and

a depreciation expense subtraction step to calculate the research and development expense after depreciation by subtracting the depreciation expense from the research and development investment amount.

**10.** The theoretical stock price computing method of Claim 9, wherein the depreciation expense calculation step comprises;

a calculation step based on a macro company evaluation whereby the intellectual assets productivity, which shows the ratio with which intellectual assets is generated by the research and development investment of companies, and the intellectual assets profitability, which shows result rate produced by utilizing the intellectual assets, are measured and the depreciation expense by company is calculated; and/or

a calculation step based on patent and other intellectual assets value valuation wherein the competitive power of patents and other intellectual assets of each company is created into an index and the depreciation expense is calculated separately for said patents and other intellectual assets.

**11.** A program for calculating the theoretical stock price of a company based on company valuation indexes, comprising;

a data acquisition function to acquire data concerning company valuation indexes including intellectual assets related indexes;

an expected earnings calculation function to calculate the expected earnings of a company using data concerning company valuation indexes including the intellectual assets related indexes;

a discount rate calculation function to calculate the discount rate for deriving company present value using data concerning the company valuation indexes;

an estimated aggregate market value calculation function to calculate the estimated aggregate market value of a company by dividing the expected earnings by the discount rate; and

a theoretical stock price calculation function to calculate the theoretical stock price by dividing the estimated aggregate market value by the total number of outstanding shares.

**12.** A program for calculating the theoretical stock price of a company based on company valuation indexes, comprising;

a data acquisition function to acquire data concerning company evaluation indexes including intellectual assets related indexes;

an after-tax business income theoretical value calculation function to calculate the after-tax business income theoretical value of a company using data concerning company valuation indexes including the intellectual assets related indexes;

an investment capital cost calculation function to calculate the investment capital cost of a company using data concerning the company valuation indexes;

an economic profit theoretical value calculation function to calculate the economic profit theoretical value by subtracting the investment capital cost from the after-tax business income theoretical value;

a discount rate calculation function to calculate the discount rate to derive the current value of a company using data concerning the company valuation indexes;

a theoretical market value added calculation function to calculate the theoretical market value added by dividing the economic profit theoretical value by the discount rate;

an equity capital calculation function to calculate the equity capital of a company using data concerning the company valuation indexes;

an estimated aggregate market value calculation function to calculate the estimated aggregate market value of a company by adding the theoretical market value added to the equity capital; and

a theoretical stock price calculation function to calculate the theoretical stock price by dividing the estimated aggregate market value by the total number of outstanding shares.

**13.** The theoretical stock price computing program of Claim 12, wherein the after-tax business income theoretical value calculation function comprises;

a factor analysis function to conduct factor analysis using data concerning the company valuation indexes of multiple companies, extract factors, and aggregate the company valuation indexes based on said factors;

a multiple regression analysis function to perform multiple regression analysis using the factors extracted by the factor analysis function and the earnings related indexes shown by the various earnings, such as the intellectual assets related earnings of multiple companies, and derive a regression line showing the correlation between these;

a gross business income theoretical value calculation function, based on the regression line, to calculate the theoretical value of the earnings related indexes of the company that is the theoretical stock price calculation target and then, based on said theoretical value, calculate the gross business income theoretical value;

an operating profit theoretical value calculation function to calculate the operating profit theoretical value by subtracting the book value of the research and development expenses from the gross business income theoretical value;

an after-tax operating profit theoretical value calculation function to calculate the after-tax operating profit theoretical value by subtracting the corporate income tax from the operating profit theoretical value;

a research and development expense deemed asset amount calculation function to calculate the deemed asset amount of research and development expenses using data relating to company valuation indexes including the intellectual assets related indexes; and

a research and development expense deemed asset amount addition function to calculate the after-tax business income theoretical value by adding the research and development expense deemed asset amount to the after-tax operating profit theoretical value.

**14.** The theoretical stock price computing program of Claim 13, wherein the research and development expense deemed asset amount calculation function comprises;

a research and development investment amount data acquisition function to acquire a research and development investment amount data;

a depreciation expense calculation function to calculate as depreciation expense the loss portion of the research and development investment amount; and

a depreciation expense subtraction function to calculate the research and development expense after depreciation by subtracting the depreciation expense from the research and development investment amount.

**15.** The theoretical stock price computing program of Claim 14, wherein the depreciation expense calculation function comprises;

a calculation function based on a macro company evaluation whereby the intellectual assets productivity, which shows the ratio with which intellectual assets is generated by the research and development investment of companies, and the intellectual assets profitability, which shows result rate produced by utilizing the intellectual assets, are measured and the depreciation expense by company is calculated; and/or

a calculation function based on patent and other intellectual assets value valuation wherein the competitive power of patents and other intellectual assets of each company is created into an index and the depreciation expense is calculated separately for said patents and other intellectual assets.

**Amended claims under Art. 19.1 PCT**

**1.** A device that calculates the theoretical stock price of a company based on company valuation indexes, comprising;

data acquisition means that acquires data concerning company valuation indexes including intellectual assets related indexes;

expected earnings calculation means that calculates the expected earnings of a company using data concerning company valuation indexes including the intellectual assets related indexes;

discount rate calculation means that calculates the discount rate for deriving company present value using data concerning the company valuation indexes;

estimated aggregate market value calculation means that calculates the estimated aggregate market value of a company by dividing the expected earnings by the discount rate; and

theoretical stock price calculation means that calculates the theoretical stock price by dividing the estimated aggregate market value by the total number of outstanding shares.

**2.** (amended) A device that calculates the theoretical stock price of a company based on company valuation indexes, comprising;

data acquisition means that acquires data concerning company evaluation indexes including intellectual assets related indexes;

factor analysis means that conducts factor analysis using data concerning the company valuation indexes of multiple companies, extracts factors, and aggregates the company valuation indexes based on said factors;

multiple regression analysis means that performs multiple regression analysis using the factors extracted by the factor analysis means and the earnings related indexes shown by the various earnings, such as the intellectual assets related earnings of multiple companies, and derives a regression line showing the correlation between these;

gross business income theoretical value calculation means that, based on the regression line, calculates the theoretical value of the earnings related indexes of the company that is the theoretical stock price calculation target and that then, based on said theoretical value, calculates the gross business income theoretical value;

after-tax business income theoretical value calculation means that calculates the after-tax business income theoretical value of a company using the gross business income theoretical value and data concerning company valuation indexes including the intellectual assets related indexes;

investment capital cost calculation means that calculates the investment capital cost of a company using data concerning the company valuation indexes;

economic profit theoretical value calculation means that calculates the economic profit theoretical value by subtracting the investment capital cost from the after-tax business income theoretical value;

discount rate calculation means that calculates the discount rate to derive the current value of a company using data concerning the company valuation indexes;

theoretical market value added calculation means that calculates the theoretical market value added by dividing the economic profit theoretical value by the discount rate;

equity capital calculation means that calculates the equity capital of a company using data concerning the company valuation indexes;

estimated aggregate market value calculation means that calculates the estimated aggregate market value of a company by adding the theoretical market value added to the equity capital; and

theoretical stock price calculation means that calculates the theoretical stock price by dividing the estimated aggregate market value by the total number of outstanding shares.

3. The theoretical stock price computing device of Claim 2, wherein the after-tax business income theoretical value calculation means comprise;

factor analysis means that conducts factor analysis using data concerning the company valuation indexes of multiple companies, extracts factors, and aggregates the company valuation indexes based on said factors;

multiple regression analysis means that performs multiple regression analysis using the factors extracted by the factor analysis means and the earnings related indexes shown by the various earnings, such as the intellectual assets related earnings of multiple companies, and derives a regression line showing the correlation between these;

gross business income theoretical value calculation means that, based on the regression line, calculates the theoretical value of the earnings related indexes of the company that is the theoretical stock price calculation target and that then, based on said theoretical value, calculates the gross business income theoretical value;

operating profit theoretical value calculation means that calculates the operating profit theoretical value by subtracting the book value of the research and development expenses from the gross business income theoretical value;

after-tax operating profit theoretical value calculation means that calculates the after-tax operating profit theoretical value by subtracting the corporate income tax from the operating profit theoretical value;

research and development expense deemed asset amount calculation means that calculates the deemed asset amount of research and development expenses using data relating to company valuation indexes including the intellectual assets related indexes; and

research and development expense deemed asset amount addition means that calculates the after-tax business income theoretical value by adding the research and development expense deemed asset amount to the after-tax operating profit theoretical value.

4. The theoretical stock price computing device of Claim 3, wherein the research and development expense deemed asset amount calculation means comprise;

research and development investment amount data acquisition means that acquires a research and development investment amount data;

depreciation expense calculation means that calculates as depreciation expense the loss portion of the research and development investment amount; and

depreciation expense subtraction means that calculates the research and development expense after depreciation by subtracting the depreciation expense from the research and development investment amount.

5. The theoretical stock price computing device of Claim 4, wherein the depreciation expense calculation means comprise;

calculation means based on a macro company evaluation whereby the intellectual assets productivity, which shows the ratio with which intellectual assets is generated by the research and development investment of companies, and the intellectual assets profitability, which shows result rate produced by utilizing the intellectual assets, are measured and the depreciation expense by company is calculated; and/or

calculation means based on patent and other intellectual assets value valuation wherein the competitive power of patents and other intellectual assets of each company is created into an index and the depreciation expense is calculated separately for said patents and other intellectual assets.

**6.** A method for calculating the theoretical stock price of a company based on company valuation indexes, comprising;

a data acquisition step to acquire data concerning company valuation indexes including intellectual assets related indexes;

an expected earnings calculation step to calculate the expected earnings of a company using data concerning company valuation indexes including the intellectual assets related indexes;

a discount rate calculation step to calculate the discount rate for deriving company present value using data concerning the company valuation indexes;

an estimated aggregate market value calculation step to calculate the estimated aggregate market value of a company by dividing the expected earnings by the discount rate; and

a theoretical stock price calculation step to calculate the theoretical stock price by dividing the estimated aggregate market value by the total number of outstanding shares.

**7.** (amended) A method for calculating the theoretical stock price of a company based on company valuation indexes, comprising;

a data acquisition step to acquire data concerning company evaluation indexes including intellectual assets related indexes;

a factor analysis step to conduct factor analysis using data concerning the company valuation indexes of multiple companies, extract factors, and aggregate the company valuation indexes based on said factors;

a multiple regression analysis step to perform multiple regression analysis using the factors extracted by the factor analysis step and the earnings related indexes shown by the various earnings, such as the intellectual assets related earnings of multiple companies, and derive a regression line showing the correlation between these;

a gross business income theoretical value calculation step, based on the regression line, to calculate the theoretical value of the earnings related indexes of the company that is the theoretical stock price calculation target and then, based on said theoretical value, calculate the gross business income theoretical value;

an after-tax business income theoretical value calculation step to calculate the after-tax business income theoretical value of a company using the gross business income theoretical value and data concerning company valuation indexes including the intellectual assets related indexes;

an investment capital cost calculation step to calculate the investment capital cost of a company using data concerning the company valuation indexes;

an economic profit theoretical value calculation step to calculate the economic profit theoretical value by subtracting the investment capital cost from the after-tax business income theoretical value;

a discount rate calculation step to calculate the discount rate to derive the current value of a company using data concerning the company valuation indexes;

a theoretical market value added calculation step to calculate the theoretical market value added by dividing the economic profit theoretical value by the discount rate;

an equity capital calculation step to calculate the equity capital of a company using data concerning the company valuation indexes;

an estimated aggregate market value calculation step to calculate the estimated aggregate market value of a company by adding the theoretical market value added to the equity capital; and

a theoretical stock price calculation step to calculate the theoretical stock price by dividing the estimated aggregate market value by the total number of outstanding shares.

**8.** The theoretical stock price computing method of Claim 7, wherein the after-tax business income theoretical value calculation step comprises;

a factor analysis step to conduct factor analysis using data concerning the company valuation indexes of multiple companies, extract factors, and aggregate the company valuation indexes based on said factors;

a multiple regression analysis step to perform multiple regression analysis using the factors extracted by the factor analysis step and the earnings related indexes shown by the various earnings, such as the intellectual assets related earnings of multiple companies, and derive a regression line showing the correlation between these;

a gross business income theoretical value calculation step, based on the regression line, to calculate the theoretical value of the earnings related indexes of the company that is the theoretical stock price calculation target and then, based on said theoretical value, calculate the gross business income theoretical value;

an operating profit theoretical value calculation step to calculate the operating profit theoretical value by subtracting the book value of the research and development expenses from the gross business income theoretical value;

an after-tax operating profit theoretical value calculation step to calculate the after-tax operating profit theoretical value by subtracting the corporate income tax from the operating profit theoretical value;

a research and development expense deemed asset amount calculation step to calculate the deemed asset amount of research and development expenses using data relating to company valuation indexes including the intellectual assets related indexes; and

a research and development expense deemed asset amount addition step to calculate the after-tax business income theoretical value by adding the research and development expense deemed asset amount to the after-tax operating profit theoretical value.

**9.** The theoretical stock price computing method of Claim 8, wherein the research and development expense deemed asset amount calculation step comprises;

a research and development investment amount data acquisition step to acquire a research and development investment amount data;

a depreciation expense calculation step to calculate as depreciation expense the loss portion of the research and development investment amount; and

a depreciation expense subtraction step to calculate the research and development expense after depreciation by subtracting the depreciation expense from the research and development investment amount.

**10.** The theoretical stock price computing method of Claim 9, wherein the depreciation expense calculation step comprises;

a calculation step based on a macro company evaluation whereby the intellectual assets productivity, which shows the ratio with which intellectual assets is generated by the research and development investment of companies, and the intellectual assets profitability, which shows result rate produced by utilizing the intellectual assets, are measured and the depreciation expense by company is calculated; and/or

a calculation step based on patent and other intellectual assets value valuation wherein the competitive power of patents and other intellectual assets of each company is created into an index and the depreciation expense is calculated separately for said patents and other intellectual assets.

**11.** A program for calculating the theoretical stock price of a company based on company valuation indexes, comprising;

a data acquisition function to acquire data concerning company valuation indexes including intellectual assets related indexes;

an expected earnings calculation function to calculate the expected earnings of a company using data concerning company valuation indexes including the intellectual assets related indexes;

a discount rate calculation function to calculate the discount rate for deriving company present value using data concerning the company valuation indexes;

an estimated aggregate market value calculation function to calculate the estimated aggregate market value of a company by dividing the expected earnings by the discount rate; and

a theoretical stock price calculation function to calculate the theoretical stock price by dividing the estimated aggregate market value by the total number of outstanding shares.

**12.** (amended) A program for calculating the theoretical stock price of a company based on company valuation indexes, comprising;

a data acquisition function to acquire data concerning company evaluation indexes including intellectual assets related indexes;

a factor analysis function to conduct factor analysis using data concerning the company valuation indexes of multiple companies, extract factors, and aggregate the company valuation indexes based on said factors;

a multiple regression analysis function to perform multiple regression analysis using the factors extracted by the factor analysis function and the earnings related indexes shown by the various earnings, such as the intellectual assets related earnings of multiple companies, and derive a regression line showing the correlation between these;

a gross business income theoretical value calculation function, based on the regression line, to calculate the theoretical value of the earnings related indexes of the company that is the theoretical stock price calculation target and then, based on said theoretical value, calculate the gross business income theoretical value;

an after-tax business income theoretical value calculation function to calculate the after-tax business income theoretical value of a company using the gross business income theoretical value and data concerning company valuation indexes including the intellectual assets related indexes;

an investment capital cost calculation function to calculate the investment capital cost of a company using data concerning the company valuation indexes;

an economic profit theoretical value calculation function to calculate the economic profit theoretical value by subtracting the investment capital cost from the after-tax business income theoretical value;

a discount rate calculation function to calculate the discount rate to derive the current value of a company using data concerning the company valuation indexes;

a theoretical market value added calculation function to calculate the theoretical market value added by dividing the economic profit theoretical value by the discount rate;

an equity capital calculation function to calculate the equity capital of a company using data concerning the company valuation indexes;

an estimated aggregate market value calculation function to calculate the estimated aggregate market value of a company by adding the theoretical market value added to the equity capital; and

a theoretical stock price calculation function to calculate the theoretical stock price by dividing the estimated aggregate market value by the total number of outstanding shares.

**13.** The theoretical stock price computing program of Claim 12, wherein the after-tax business income theoretical value calculation function comprises;

a factor analysis function to conduct factor analysis using data concerning the company valuation indexes of multiple companies, extract factors, and aggregate the company valuation indexes based on said factors;

a multiple regression analysis function to perform multiple regression analysis using the factors extracted by the factor analysis function and the earnings related indexes shown by the various earnings, such as the intellectual assets related earnings of multiple companies, and derive a regression line showing the correlation between these;

a gross business income theoretical value calculation function, based on the regression line, to calculate the theoretical value of the earnings related indexes of the company that is the theoretical stock price calculation target and then, based on said theoretical value, calculate the gross business income theoretical value;

an operating profit theoretical value calculation function to calculate the operating profit theoretical value by subtracting the book value of the research and development expenses from the gross business income theoretical value;

an after-tax operating profit theoretical value calculation function to calculate the after-tax operating profit theoretical value by subtracting the corporate income tax from the operating profit theoretical value;

a research and development expense deemed asset amount calculation function to calculate the deemed asset amount of research and development expenses using data relating to company valuation indexes including the intellectual assets related indexes; and

a research and development expense deemed asset amount addition function to calculate the after-tax business income theoretical value by adding the research and development expense deemed asset amount to the after-tax operating profit theoretical value.

**14.** The theoretical stock price computing program of Claim 13, wherein the research and development expense deemed asset amount calculation function comprises;

a research and development investment amount data acquisition function to acquire a research and development investment amount data;

a depreciation expense calculation function to calculate as depreciation expense the loss portion of the research and development investment amount; and

a depreciation expense subtraction function to calculate the research and development expense after depreciation by subtracting the depreciation expense from the research and development investment amount.

**15.** The theoretical stock price computing program of Claim 14, wherein the depreciation expense calculation function comprises;

a calculation function based on a macro company evaluation whereby the intellectual assets productivity, which shows the ratio with which intellectual assets is generated by the research and development investment of companies, and the intellectual assets profitability, which shows result rate produced by utilizing the intellectual assets, are measured and the depreciation expense by company is calculated; and/or a calculation function based on patent and other intellectual assets value valuation wherein the competitive power of patents and other intellectual assets of each company is created into an index and the depreciation expense is calculated separately for said patents and other intellectual assets.

**Statement under Art. 19.1 PCT**

1 This amendment clarifies that "business profit after tax theoretical value" in claims 2, 7 and 12 is calculated by using "total business income theoretical value" and that the "total business income theoretical value" is calculated by using "factor analysis" and "multiple regression analysis" as stated in claims 3, 8 and 13.

FIG. 1

100

FIG. 2

FIG. 3

Business/Management Related Index (1)

FIG. 4

EP 1 868 156 A1

| Index Group | Index | Definition (Formula) |
|---|---|---|
| Investment Related | Facility Investment Amount | {(Current Term Tangible Fixed Assets - Previous Term Tangible Fixed Assets)} + (Current Term Depreciation Cost) |
| | Investment Trend Index | Term-on-Term Ratio of {(Facility Investment Amount) + (R&D Cost)} |
| Management / Finance Analysis Related | Facility Investment Efficiency | (Value Added Amount) / (Tangible Fixed Assets) |
| | Labor Productivity | (Value Added Amount) / (Number of Employees) |
| | Labor Equipment Ratio | (Tangible Fixed Assets) / (Number of Employees) |
| | Labor Distribution Share (To Value Added) | {(Personnel Expense to be Included in Selling Cost and Administrative Expenses) + (Labor Cost to be Included in Manufacturing Cost)} / (Value Added Amount) |
| | Total Factor Productivity | (Value Added Amount Rate of Change) - {(1 - Labor Distribution Share (To Value Added)) × (Depreciation Target Tangible Fixed Assets Rate of Change)} - {(Labor Distribution Share (To Value Added)) × (Number of Employees Rate of Change)} |
| | Cost-to-Sales Ratio | (Cost of Sales) / (Sales Volume) |
| | Cost of Sales-and-Administration Ratio to Sales | (Selling Cost and Administrative Expenses) / (Sales Volume) |
| | Interest Bearing Debt Ratio | (Interest Bearing Debt) / (Total Assets) |
| | Equity to Asset Ratio | (Equity Capital) / (Total Assets) |
| | Stock Price | (Stock Price) |
| Profit Related | Sales Volume | (Sales Volume) |
| | Value Added Amount | (Operating Net Profit) + (Interest Paid and Discount) + (R&D Cost) + (Depreciation Cost) + (Personnel Expense (including board members' remuneration)) + (Welfare Expense) + (Tax and Dues) (Operating Net Profit) = (Operating Profit) - (Interest Paid and Discount) |
| | Gross Business Profit (GOP) | (Operating Profit) + (R&D Cost) |
| | Gross Operating Profit (GBP) | (Gross Business Profit (GOP)) + (Patent Royalty Income) |
| | Earnings Before Interest, Taxes, Depreciation and Amortization (EBITDA) | (Operating Profit) + (Depreciation Cost) |
| | Operating Profit | (Operating Profit) |
| | Operating Net Profit | (Operating Profit) - (Interest Paid and Discount) |
| | Patent Royalty Income | (Patent Royalty Income (Including Royalty Income of Trademarks and Brands, etc.)) |
| | ROA $\alpha$ | {(Value Added Amount) + (Patent Royalty Income)} / (Total Assets) |
| | ROA $\beta$ | {(GOP) + (Patent Royalty Income)} / (Total Assets) |
| | ROA $\gamma$ | {(EBITDA) + (Patent Royalty Income)} / (Total Assets) |
| | ROA $\delta$ | {(Operating Profit) + (Patent Royalty Income)} / (Total Assets) |
| | Earnings on Intellectual Assets (EOIA) | {(GOP) + (Patent Royalty Income)} - {(Financial Assets) × (Profit Ratio m)} + {(Tangible Fixed Assets) × (Profit Ratio f)} (Profit Ratio m): Application of Short Term Prime Rate; (Profit Ratio f): Application of Long Term Prime Rate |
| | Return On Intellectual Assets (ROIA) (=ROA $\varepsilon$) | (Earnings on Intellectual Assets) / (Total Assets) |

Business/Management Related Index (2)

| Index Group | Index | Definition (Formula) |
|---|---|---|
| Excess Profit Related | Excess Value Added Amount | Sales Volume × {(Sales Volume Value Added Ratio) − (Industry Average Sales Volume Value Added Ratio)} |
| | Excess GOP | Sales Volume × {(Sales Volume GOP Ratio) − (Industry Average Sales Volume GOP Ratio)} |
| | Excess GBP | Sales Volume × {(Sales Volume GBP Ratio) − (Industry Average Sales Volume GBP Ratio)} |
| | Excess EBITDA | Sales Volume × {(Sales Volume EBITDA Ratio) − (Industry Average Sales Volume EBITDA Ratio)} |
| | Excess Operating Profit | Sales Volume × {(Operating Profit Ratio (To Sales)) − (Industry Average Operating Profit Ratio (To Sales))} |
| | Excess ROA $\alpha$ | (ROA $\alpha$) − (Industry Average ROA $\alpha$) |
| | Excess ROA $\beta$ | (ROA $\beta$) − (Industry Average ROA $\beta$) |
| | Excess ROA $\gamma$ | (ROA $\gamma$) − (Industry Average ROA $\gamma$) |
| | Excess ROA $\delta$ | (ROA $\delta$) − (Industry Average ROA $\delta$) |
| | Excess Earnings on Intellectual Assets (EXEOIA) | (Total Assets = Average of Term Beginning and Term End) × {(Return on Intellectual Assets) − (Industry Average of Return on Intellectual Assets) |
| Market Valuation Related | Market Value Added (MVA: Actual Value) | (Total Number of Outstanding Shares) × (Stock Price) − (Shareholders' Equity) |
| | Market Value Added (MVA: Theoretical Value) | Present Value of Economic Value Added in Future = [{(R&D Cost) + (Operating Profit Theoretical Value + Patent Royalty Income) × (1 − Corporate Tax Rate)} − {(Interest Bearing Debt) + (Equity Capital)} × (WACC)] / (Capital Cost) |
| | Price Book-value Ratio (PBR) | (Aggregate Market Value) / (Equity Capital) |
| | Expected Intellectual Property Profit (EIPP) | {(Fixed Liabilities) × (Profit Ratio a) + (Aggregate Market Value) × (Profit Ratio p)} − {(Financial Assets) × (Profit Ratio m) + (Tangible Fixed Assets) × (Profit Ratio f)} (Profit Ratio a): (Weighted Average of Long Term Prime Rate and Bond Rate) × (1 − Corporate Tax) (Profit Ratio p): Calculated Based on Capital Asset Pricing Model (CAPM). Yield on Long Term 10-Year Government Bonds, Stock Investment Profit Ratio, $\beta$ Value were used; (Profit Ratio m): Application of Short Term Prime Rate (Profit Ratio f): Application of Long Term Prime Rate |

FIG. 5

EP 1 868 156 A1

R&D Related Index

| Index Group | Index | Definition (Formula) |
|---|---|---|
| R&D Related | R&D Cost | Total Amount of R&D Cost (Desirable to Use Average Value of Several Terms) |
| | R&D Stock | Cumulative Total Amount of R&D Cost |
| | Number of Inventors | (Calculated Based on "Inventor" Column of Laid-Open Publications) |
| | Inventor Stock | Cumulative Number of Inventors |
| | Inventor Ratio | (Number of Inventors) / (Number of Employees) |
| | R&D Cost per Inventor | (R&D Cost) / (Number of Inventors) |
| R&D Efficiency Related | R&D Cost Ratio $\alpha$ | (R&D Cost) / (Sales Volume) |
| | R&D Cost Ratio $\beta$ | (R&D Cost) / (Value Added Amount) |
| | R&D Cost Ratio $\gamma$ | (R&D Cost) / (GOP) |
| | R&D Cost Ratio $\delta$ | (R&D Cost) / (Total Assets) |
| | R&D Efficiency $\varepsilon$ | (Operating Profit) / (R&D Cost) (Desirable to Use Average Value of Several Terms for R&D Cost) |
| | Patent Application Productivity | (Number of Claims of Patent Applications) / (R&D Cost) (The Number of Claims May be the Number of Claims in Each Section (A to H) and the Number of Claims May be replaced by the Number of Patent Applications) (Average Value of Several Terms is Desirable for the R&D Cost) |
| | Examination Request Productivity | Correction of (Patent Application Productivity). (Patent Application Productivity) × (Estimated Examination Request Ratio) (Estimated Examination Request Ratio: Sought Based on Number of Examination Requests for Previous Applications in which the term for Examination Request is expired.) |
| | Patent Granted Productivity | Correction of (Patent Application Productivity). (Patent Application Productivity) × (Estimated Registration Ratio) (Estimated Registration Ratio: Sought Based on Number of Registrations of Previous Applications, Lapsed Years, Average Years to Patent Granted) |

FIG. 6

Intellectual Assets Related Index (1)

FIG. 7

EP 1 868 156 A1

| Index Group | Index | Definition (Formula) |
|---|---|---|
| Patent Application Related | Number of Patent Applications | (Joint Application is Recorded as One Application) |
| | Patent Application Stock | (Cumulative Number of Patent Applications) |
| | Cumulative Patent Applications (A to H) | (Cumulative Patent Applications by Section) |
| | Number of Claims Filed | (Sum of "Number of Claims" of Laid-Open Publications) |
| | Number of Claims per Patent Application | (Number of Claims Filed) / (Number of Patent Applications) |
| | Application per Inventor | (Number of Patent Applications) / (Number of Inventors) (Number of Patent Applications Does Not Include Joint Applications) |
| | Number of Claims per Inventor (Patent Application) | (Number of Claims Filed) / (Number of Inventors) |
| | Number of Joint Applications | (Number of Joint Applications Among Patent Applications Filed) |
| | Joint Filing Ratio | (Number of Joint Applications)/(Number of Patent Applications) |
| | Number of Applicants in Joint Filing | (Number of Joint Applicants in Joint Applicaions) |
| | Number of Applications Top Ranking Inventors Involved | Number of Applications in which M Number of Top Ranking Inventors Within the Company Involved [This May be in a Single Year or Cumulative Total of Several Years] |
| Examination Request Related | Number of Examination Requests | (Number of Examination Requests Filed) |
| | Number of Examination Requests Filed by Section | (Number of Examination Requests of Each Section (A to H)) |
| | Years to Examination Request (Average) | [ $\Sigma$ (Date of Examination Request − Filing Date)] / [(Number of Examination Requests) × (Annual Number of Days)] |
| | Examination Request Ratio | (Examination Request Ratio Pertaining to Number of Patent Applications of Each Year) |
| | Cumulative Number of Examination Requests | (Cumulative Number of Examination Requests) |
| | Examination Request Ratio (to Patent Application Stock) | (Cumulative Number of Examination Requests) / (Cumulative Patent Applications Filed) |
| Patent Granted (Registrated) Related | Number of Patents Granted | (Number of Patents Granted) |
| | Registrations by Section | (Number of Registrations by Section (A to H)) |
| | Number of Registered Claims | (Number of "Claims" in Registered Gazette) |
| | Patent Granted per Inventor | (Number of Registrations) / (Number of Inventors) |
| | Number of Claims per Inventor (Patent Granted) | (Number of Registered Claims) / (Number of Inventors) |
| | Years to Patent Granted (Average) | [ $\Sigma$ (Patent Registration Date − Patent Filing Date)] / [(Number of Patents Granted) × (Annual Number of Days)] |
| | Patent Granted Ratio (to Number of Applications) | (Number of Patents Granted Each Year) / (Number of Patent Applications Filed Each Year) |
| | Patent Granted Stock | (Patent Granted Stock at the End of Each Year) |
| | Patent Granted Ratio (to Application Stock) | (Patent Granted Stock) / (Patent Application stock) |
| | Patent Granted Ratio (to Number of Examination Requests) | (Number of Patents Granted Each Year) / (Number of Examination Requests Filed Each Year) |
| | Patent Granted Stock Ratio | (Patent Granted Stock) / (Cumulative Number of Examination Requests) |
| | Effective Number of Patents Granted | (Number of Patents Granted Each Year) − (Number of Patents Invalidated Among Patent Registrations Each Year) |
| | Patent Granted Renewal Ratio | (Effective Number of Patents Granted Among Patent Registrations Each Year) / (Number of Patents Granted Each Year) |

Intellectual Assets Related Index (2)

FIG. 8

EP 1 868 156 A1

| Index Group | Index | Definition (Formula) |
|---|---|---|
| Items Related to Oppositions and Invalidation Trials Filed (as Defendant) | Number of Oppositions and Invalidation Trials (as Defendant) | Number of Patents Subject to Oppositions or Invalidation Trials (as Defendant) in Each Year (This May be an Overall Total, Total Number of Several Years, or Average in Several Years) |
| | Ratio of Number of Oppositions and Invalidation Trials (as Defendant) to Number of Patent Application | Ratio of Number of Oppositions and Invalidation Trials in Each Year (as Defendant) to Number of Applications Filed in Same Year = (Number of Patents Subject to Oppositions or Invalidation Trials (as Defendant) in Each Year of a Certain Company)/(Number of Patent Applications Filed by Said Company in Same Year) |
| | Ratio of Number of Oppositions and Invalidation Trials (as Defendant) to Number of Patent Granted | Ratio of Number of Oppositions and Invalidation Trials in Each Year (as Defendant) to Number of Patents Granted in Same Year = (Number of Patents Subject to Oppositions or Invalidation Trials Filed (as Defendant))/(Number of Patents Granted to Said Company in Same Year) |
| | Weighted Number of Oppositions and Invalidation Trials (as Defendant) | Number of Opponents to Patents Subject to Oppositions or Invalidation Trials (as Defendant) in Each Year = Σ (Number of Patents N Subject to Oppositions or Invalidation Trials (as Defendant)) × (Number of People Who Filed Oppositions or Invalidation Trials Against the N Patents) |
| | Ratio of Weighted Number of Oppositions and Invalidation Trials (as Defendant) to Number of Patent Application | Ratio of Number of Opponents to Patents Subject to Oppositions or Invalidation Trials (as Defendant) in Each Year to Number of Applications Filed by the Company in Same Year = { Σ (Number of Patents N Subject to Oppositions or Invalidation Trials (as Defendant)) × (Number of People Who Filed Oppositions or Invalidation Trials Against the N Patents) }/(Number of Applications Filed by Said Company in Same Year) |
| | Ratio of Weighted Number of Oppositions and Invalidation Trials (as Defendant) to Number of Patent Granted | Ratio of Number of Opponents to Patents Subject to Oppositions or Invalidation Trials (as Defendant) in Each Year to Number of Patents Granted to the Company in Same Year = { Σ (Number of Patents N Subject to Oppositions or Invalidation Trials (as Defendant)) × (Number of People Who Filed Oppositions or Invalidation Trials Against the N Patents) }/(Number of Patents Granted to Said Company in Same Year) |
| | Relative Value of Number of Oppositions and Invalidation Trials (as Defendant) | Ratio to Average Number in Industry in Relation to Number of Patents Subject to Oppositions or Invalidation Trials (as Defendant) in Each Year = (Number of Patents Subject to Oppositions or Invalidation Trials (as Defendant) in Each Year of a Certain Company)/(Average Number in Industry of Said Company in Same Year) |
| | Relative Value of Weighted Number of Oppositions and Invalidation Trials (as Defendant) | Ratio to Average Number in Industry in Relation to Weighted Number of Patents Subject to Oppositions or Invalidation Trials (as Defendant) in Each Year = { Σ (Number of Patents N Subject to Oppositions or Invalidation Trials (as Defendant)) × (Number of People Who Filed Oppositions or Invalidation Trials Against the N Patents) }/(Average Number of People in Industry of Said Company in Same Year) |
| | Relative Value of Ratio of Number of Oppositions and Invalidation Trials (as Defendant) to Number of Patent Application | Ratio to Average Ratio in Industry in Relation to Ratio of Number of Oppositions and Invalidation Trials (as Defendant) in Each Year to Number of Applications = (Ratio of Number of Oppositions and Invalidation Trials (as Defendant) in Each Year of a Certain Company to Number of Applications)/(Average Rario in Industry of Said Company in Same Year) |
| | Relative Value of Ratio of Weighted Number of Oppositions and Invalidation Trials (as Defendant) to Number of Patent Application | Ratio to Average Ratio in Industry in Relation to Ratio of Weighted Number of Oppositions and Invalidation Trials (as Defendant) in Each Year to Number of Applications = (Ratio of Weighted Number of Oppositions and Invalidation Trials (as Defendant) in Each Year of a Certain Company to Number of Applications)/(Average Ratio in Industry of Said Company in Same Year) |
| | Relative Value of Ratio of Number of Oppositions and Invalidation Trials (as Defendant) to Number of Patent Granted | Ratio to Average Ratio in Industry in Relation to Ratio of Number of Oppositions and Invalidation Trials (as Defendant) in Each Year to Number of Patents Granted = (Ratio of Number of Oppositions and Invalidation Trials (as Defendant) in Each Year of a Certain Company to Number of Patents Granted)/(Average Ratio in Industry of Said Company in Same Year) |
| | Relative Value of Ratio of Weighted Number of Oppositions and Invalidation Trials (as Defendant) to Number of Patent Granted | Ratio to Average Ratio in Industry in Relation to Ratio of Weighted Number of Oppositions and Invalidation Trials (as Defendant) in Each Year to Number of Patents Granted = (Ratio of Weighted Number of Oppositions and Invalidation Trials (as Defendant) in Each Year of a Certain Company to Number of Patents Granted)/(Average Ratio in Industry of Said Company in Same Year) |
| Citation/ Reference Related | Number of Citations (as Patentee) | Number of Times a Certain Patent was Cited in Rejections of Other Patents (This May be an Overall Total, Total Number of Several Years, or Average in Several Years) |
| | Number of Requests for Inspection/Delivery | Number of Requests for File Wrapper of a Certain Patent (This May be an Overall Total, Total Number of Several Years, or Average in Several Years) |
| | Number of Appeal Trials Filed | Number of Appeal Trials Filed by a Certain Company [This May be the Number of Cases in a Single Year or Several Years] |

Intellectual Assets Related Index (3)

FIG. 9

| Index Group | Index | Definition (Formula) |
|---|---|---|
| Patent Stock Related | Total Number of Effective Patents | (Patent Granted Stock) − (Patent Invalidation Stock) [This May be of a certain time, or an Average in Several Years] |
| | Total Share of Effective Patents | $\Sigma$ {(Number of Effective Patents of Company by Each International Patent Classification)/(Total Number of Effective Patents by Each International Patent Classification)} [This May be of a certain time, or an Average in Several Years] |
| | Total Patent Granted Renewal Ratio | (Total Number of Effective Patents)/(Patent Granted Stock) [This May be of a certain time, or an Average in Several Years] |
| | Years to Renewal Patent Granted Expiration (Average) | { $\Sigma$ (Scheduled Invalidation Date of Each Patent of the Total Number of Effective Patents − Year End)} / {(Total Number of Effective Patents) × (Annual Number of Days)} |
| | Patent Stock Index | (Total Number of Effective Patents) × (Years to Renewal Patent Granted Expiration (Average)) [This May be of a certain time, or an Average in Several Years] |
| | Total Patent Assets | {(R&D Cost)/(Number of Patents Granted)} × (Total Number of Effective Patents) [R&D Cost May be in a Single Year or Cumulative Total of Several Years] |
| Patent Concentration Index Related | Share of Claims Filed (A to H) | (Number of Claims Filed by Company in One of International Patent Classification Sections A to H)/(Total Number of Claims Filed in the Same International Patent Classification Section) [Number of Claims May be of a Single Year, or a Cumulative Total of Several Years] |
| | Patent Concentration Index | $\Sigma$ {{(Number of Claims Filed by Company by Subclasses in International Patent Classification)/(Total Number of Claims Filed by Company)}$^2$] |
| | Patent Concentration Index (A to H) | Patent Concentration Index by Each of International Patent Classification Sections A to H |
| | Patent Diversification Index (PDI) | {1 − (Patent Concentration Index)} [The Patent Concentration Index May be by a Section or All Sections] |
| | Patent Competitive Position Index (PCPI) | $\Sigma$ {{ $\Sigma$ (Share of Each Company in Each Technical Field)$^2$ } × (Company Share in Each Technical Field)] × (1 + Excess Growth Ratio) [(1 + Excess Growth Ratio) Does Not Have to be Multiplied. The Technical Field is IPC Subclass or the like.] |
| | Average Patent Competitive Position Index (Average PCPI) | (Company PCPI)/(Number of Technical Fields covered by Company's Patent Applications) [This May be of a Single Year, or an Average in Several Years] |
| Patent Profitability Related | Patent Profitability $\alpha$ | {(GOP) + (Patent Royalty Income)} /(Total Number of Effective Patents) [This May be of a Single Year, or an Average in Several Years] |
| | Patent Profitability $\beta$ | {(Excess Value Added) + (Patent Royalty Income)} /(Total Number of Effective Patents) [This May be of a Single Year, or an Average in Several Years] |
| | Patent Profitability $\gamma$ | {(Excess GOP) + (Patent Royalty Income)} /(Total Number of Effective Patents) [This May be of a Single Year, or an Average in Several Years] |
| | Patent Profitability $\delta$ | {(Excess Earnings on Intellectual Assets) + (Patent Royalty Income)} /(Total Number of Effective Patents) [This May be of a Single Year, or an Average in Several Years] |
| Patent Power Related | Patent Desire Index | Degree of Company's Intention to Acquire Patents. Aggregation of Examination Request Ratio (to Patent Application Stock), Patent Granted Ratio (to Examination Requested Stock) and so on Based on Generalized Linear Model (Generalized Linear Model: Analysis of Variance, Factor, Principle Component, Covariance Structure, Multivariance Analysis and so on) |
| | Check Power Against Other Company Index | Degree of Suppressing Rights of Other Companies, and Improving Value of One's Patent. Aggregation of Patent Oppositions (as Defendant), Number of Citations of Other Companies and so on Based on Generalized Linear Model.) (Generalized Linear Model: Analysis of Variance, Factor, Principle Component, Covariance Structure, Multivariance Analysis and so on) |

45

FIG. 10

SEARCH SCREEN

Select Name of Industry From the List

Select Name of Company From the List

Search
Return

| Name of Industry |

| (Name of Company) |

Select Display Screen

| (Screen Selection) |

You May Select From Either List

| List of Industries (w/Company Name) |

| List of Company Valuation Indexes |

| List of Screen Display |

| List of Industries (Alphabetical Order of Companies) |

| Theoretical Stock Price Display |

EP 1 868 156 A1

FIG. 11

```
                    ╭─────────────────────╮
                   ╱  START CALCULATION    ╲
                  │   OF BUSINESS PROFIT    │
                  │      AFTER TAX          │
                   ╲  THEORETICAL VALUE     ╱
                    ╰─────────┬───────────╯
                              │  ┌─ S131                       30A ─╮
                    ┌─────────▼──────────┐              ╭───────────────╮
                    │  READ INDEX DATA   │◄─────────────│   INTERNAL    │
                    └─────────┬──────────┘              │      DB       │
                              │  ┌─ S133                ╰───────────────╯
                              ▼                                  ┌─ S135
                         ╱─────────╲      YES         ┌──────────────────┐
                       ╱  FACTOR     ╲────────────────►│     FACTOR       │
                       ╲  ANALYSIS ? ╱                 │   EXTRACTION     │
                         ╲─────────╱                   └──────────────────┘
                              │ NO ◄─────────────────────────────┘
                              │  ┌─ S137
                    ┌─────────▼──────────┐
                    │ MULTIPLE REGRESSION│
                    │     ANALYSIS       │
                    └─────────┬──────────┘
                              │  ┌─ S139
                    ┌─────────▼──────────┐
                    │   DERIVE ROA β     │
                    │  THEORETICAL VALUE │
                    └─────────┬──────────┘
                              │  ┌─ S141
                    ┌─────────▼──────────┐
                    │  CALCULATE TOTAL   │
                    │   BUSINESS PROFIT  │
                    │  THEORETICAL VALUE │
                    └─────────┬──────────┘
                              │  ┌─ S143
                    ┌─────────▼──────────┐
                    │     CALCULATE      │
                    │  OPERATING PROFIT  │
                    │  THEORETICAL VALUE │
                    │ (INCLUDING PATENT  │
                    │  ROYALTY INCOME)   │
                    └─────────┬──────────┘
                              │  ┌─ S145
                    ┌─────────▼──────────┐
                    │     CALCULATE      │
                    │  OPERATING PROFIT  │
                    │     AFTER TAX      │
                    │ THEORETICAL VALUE  │
                    │ (INCLUDING PATENT  │
                    │  ROYALTY INCOME)   │
                    └─────────┬──────────┘
                              │  ┌─ S147
                    ┌─────────▼──────────┐
                    │     CALCULATE      │
                    │ DEEMED ASSET AMOUNT│
                    │  OF THE R&D COST   │
                    └─────────┬──────────┘
                              │  ┌─ S149
                    ┌─────────▼──────────┐
                    │ ADD THE DEEMED ASSET│
                    │  AMOUNT OF THE R&D │
                    │     COST TO THE    │
                    │  OPERATING PROFIT  │
                    │     AFTER TAX      │
                    │  THEORETICAL VALUE │
                    └─────────┬──────────┘
                              │
                    ╭─────────▼──────────╮
                    │        END         │
                    ╰────────────────────╯
```

FIG. 12

```
                    ┌─ S1351
          ╭─────────────────────╮
          │   START FACTOR      │
          │     ANALYSIS        │
          ╰─────────────────────╯
                    │                              30A ─┐
                    ▼     ┌─ S1353                   ╭──────────╮
          ┌─────────────────────┐                   │ INTERNAL │
          │   ACQUIRE INDEX     │◄──────────────────│    DB    │
          │      DATA           │                   ╰──────────╯
          └─────────────────────┘
                    │
                    ▼     ┌─ S1355                         ┌─ S1357
              ◇───────────────◇      YES      ┌─────────────────────────┐
             ╱  NARROW INDEX   ╲─────────────►│   CREATE CORRELATION    │
             ╲    DOWN ?       ╱              │  MATRIX AMONG INDEXES   │
              ◇───────────────◇               └─────────────────────────┘
                    │                                      │
                    │ NO                                   ▼     ┌─ S1359
                    │                          ┌─────────────────────────┐
                    │                          │     NARROW INDEX        │
                    │                          │        DOWN             │
                    │                          └─────────────────────────┘
                    │◄─────────────────────────────────────┘
                    ▼     ┌─ S1361                          ┌─ S1365
          ┌─────────────────────┐            ┌─────────────────────────┐
          │     CALCULATE       │            │    FACTOR ROTATION      │
          │  FACTOR LOADING     │            └─────────────────────────┘
          └─────────────────────┘                          ▲
                    │                                       │
                    ▼     ┌─ S1363                          │
              ◇───────────────◇                             │
             ╱       IS        ╲      YES                   │
            ╱ INTERPRETATION OF  ╲────────────────────────┘
            ╲ FACTOR DIFFICULT? ╱
              ◇───────────────◇
                    │
                    │ NO      ┌─ S1367
                    ▼
          ┌─────────────────────────────┐
          │        CALCULATE            │
          │   CHARACTERISTIC VALUE,     │
          │    FACTOR CONTRIBUTION,     │
          │ FACTOR CONTRIBUTION RATIO,  │
          │  CUMULATIVE CONTRIBUTION    │
          │       RATIO, ETC.           │
          └─────────────────────────────┘
                    │
                    ▼     ┌─ S1369
          ┌─────────────────────┐
          │  DETERMINE NUMBER   │
          │    OF FACTORS       │
          └─────────────────────┘
                    │
                    ▼     ┌─ S1370
          ┌─────────────────────┐
          │  DETERMINE FACTOR   │
          │     CONTENT         │
          └─────────────────────┘
                    │
                    ▼
          ╭─────────────────────╮
          │         END         │
          ╰─────────────────────╯

              (TO MULTIPLE
          REGRESSION ANALYSIS)
```

FIG. 13

START MULTIPLE REGRESSION ANALYSIS — S1371

DETERMINE PROFIT ELATED INDEX — S1373

READ FACTOR DATA — S1375

CALCULATE PARTIAL REGRESSION COEFFICIENT AND STANDARD PARTIAL REGRESSION COEFFICIENT OF EACH FACTOR (EXPLANATORY VARIABLE) — S1377

VERIFY SIGNIFICANCE OF EACH FACTOR (EXPLANATORY VARIABLE) — S1379

CALCULATE CONTRIBUTION RATIO OF EACH FACTOR (EXPLANATORY VARIABLE) — S1381

VERIFY ADAPTATION OF MULTIPLE REGRESSION EQUATION — S1383

CREATE RELATIONSHIP DIAGRAM BETWEEN PROFIT RELATED INDEX, SIGNIFICANT FACTOR AND INDEX (APPEND CONTRIBUTION RATIO BASED ON FACTOR LOADING AND STANDARD PARTIAL REGRESSION COEFFICIENT) — S1385

END

30A — INTERNAL DB

FIG. 14

Factor Analysis Result

| Factor Number | Factor 1 | Factor 2 | Factor 3 |
|---|---|---|---|
| Factor | Intellectual Property Stock | Productivity | Concentration of Patent and Technology |
| Patent Granted Stock H | 0.9817 | 0.1198 | -0.0764 |
| Inventor Stock | 0.9606 | 0.1844 | -0.0530 |
| Patent Granted Stock B | 0.9489 | 0.2714 | -0.0640 |
| R&D Stock | 0.9288 | 0.3255 | -0.1409 |
| Patent Granted Stock C | 0.8633 | 0.4645 | -0.1466 |
| Patent Granted Stock G | 0.7938 | 0.5115 | -0.2040 |
| Equity to Asset Ratio | 0.1911 | 0.8133 | -0.2297 |
| Labor Productivity | 0.5726 | 0.6719 | -0.1781 |
| Labor Distribution Share (To Value Added) | -0.3583 | -0.8520 | 0.1594 |
| Patent Concentration Index | -0.1529 | -0.3491 | 0.9093 |
| Patent Concentration Index G | 0.1248 | -0.2679 | 0.7448 |
| Patent Concentration Index H | -0.3618 | 0.1162 | 0.5526 |
| Characteristic Value | 5.69 | 2.75 | 1.89 |
| Contribution Ratio(%) | 47.40 | 22.93 | 15.77 |
| Cumulative Contribution Ratio(%) | 47.40 | 70.32 | 86.09 |

FIG. 15

[Multiple Regression Analysis Result]    Objective Variable    ROA $\beta$

| Explanatory Variable | Partial Regression Coefficient | Standardized Partial Regression Coefficient | Determination | T Value | Standard Error |
|---|---|---|---|---|---|
| Factor 1 | 6.1637 | 0.7223 | [**] | 9.8791 | 0.6239 |
| Factor 2 | 3.8751 | 0.4659 | [**] | 6.3727 | 0.6081 |
| Constant Term | 17.0283 | | | 27.4544 | 0.6202 |

[**]1% Level    [*]5% Level

[Adaptation of Multiple Regresstion Equation]

| Determination Coefficient Flexibility Corrected | R2' = | 0.7168 |
|---|---|---|

FIG. 16

FACTOR LOADING

CONTRIBUTION
RATIO

PATENT GRANTED
STOCK H

INVENTOR STOCK

PATENT GRANTED
STOCK B

R&D STOCK

PATENT GRANTED
STOCK C

PATENT GRANTED
STOCK G

0.9817

0.9606

0.9489

0.9288

0.8633

0.7938

FACTOR 1:
STOCK OF
INTELLECTUAL
ASSETS

60.79%

EQUITY TO ASSET
RATIO

LABOR PRODUCTIVITY

LABOR DISTRIBUTION
SHARE (TO VALUE
ADDED)

0.8133

0.6719

-0.8520

FACTOR 2:
PRODUCTIVITY

39.21%

ROA $\beta$

R2'=0.7168
(FACTORS ARE SIGNIFICANT WITH 1% LEVEL)

FIG. 17

Y

ROA $\beta$

REGRESSION
LINE

THEORETICAL
VALUE

FACTOR 1
FACTOR 2

X

51

FIG. 18

| COMPANY NAME | YEAR | SUBCLASS IN IPB INDUSTRIAL CLASSIFICATION | ROA β | | TOTAL BUSINESS PROFITS (UNIT: MILLION YEN) | | OPERATING PROFIT (UNIT: MILLION YEN) | |
|---|---|---|---|---|---|---|---|---|
| | | | ACTUAL VALUE | THEORETICAL VALUE | ACTUAL VALUE | THEORETICAL VALUE | ACTUAL VALUE | THEORETICAL VALUE |
| SON | 1994 | | 7.19 | 10.01 | 87,115 | 121,255 | 20,071 | 54,211 |
| | 1995 | | 7.79 | 9.29 | 91,596 | 106,761 | 22,100 | 37,265 |
| | 1996 | | 12.93 | 11.45 | 165,947 | 147,012 | 92,843 | 73,908 |
| | 1997 | ELECTRICAL MACHINERY | 15.69 | 12.24 | 186,899 | 145,828 | 111,427 | 70,356 |
| | 1998 | | 10.32 | 8.86 | 127,946 | 109,897 | 35,143 | 17,094 |
| | 1999 | | 8.71 | 8.99 | 114,731 | 118,381 | -3,506 | 144 |
| | 2000 | | 12.54 | 10.91 | 168,807 | 146,888 | 54,645 | 32,726 |
| | 2001 | | 6.41 | 7.73 | 78,796 | 94,918 | -37,670 | -21,548 |
| | 2002 | | -1.04 | 4.99 | -36,640 | 175,459 | -172,210 | 39,889 |
| SHA | 1994 | | 8.75 | 9.79 | 106,285 | 118,860 | 60,852 | 73,427 |
| | 1995 | | 8.75 | 9.89 | 108,668 | 122,753 | 59,534 | 73,619 |
| | 1996 | ELECTRICAL MACHINERY | 8.71 | 9.84 | 11,940 | 126,368 | 62,356 | 76,784 |
| | 1997 | | 5.77 | 8.57 | 71,923 | 106,895 | 20,587 | 55,559 |
| | 1998 | | 4.83 | 7.60 | 60,618 | 95,262 | 9,991 | 44,635 |
| | 1999 | | 7.90 | 8.88 | 97,069 | 109,116 | 44,213 | 56,260 |

FIG. 19

THEORETICAL STOCK PRICE CALCULATION RESULT

UNIT: JP¥

| TARGET COMPANY | STOCK PRICE | THEORETICAL STOCK PRICE |
|---|---|---|
| SON | 3,390 | 19,366 |
| SHA | 1,360 | 8,920 |
| NEC | 520 | 12,190 |
| FJT | 399 | 8,407 |
| HIT | 480 | 3,848 |
| TOS | 362 | 5,648 |
| MEL | 346 | 6,597 |
| CAN | 5,110 | 21,914 |
| RIC | 1,840 | 9,203 |
| OLI | 2,395 | 11,707 |
| NIK | 859 | 6,666 |

| INTERNATIONAL SEARCH REPORT | International application No. |
|---|---|
| | PCT/JP2006/304411 |

A. CLASSIFICATION OF SUBJECT MATTER
*G06Q40/00*(2006.01)

According to International Patent Classification (IPC) or to both national classification and IPC

B. FIELDS SEARCHED

Minimum documentation searched (classification system followed by classification symbols)
*G06Q40/00*(2006.01)

Documentation searched other than minimum documentation to the extent that such documents are included in the fields searched

| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | Akihiro KOYAMA, "Zaimu to Ishi Kettei", first edition, Asakura Shoten, 25 July, 2001 (25.07.01), pages 62 to 87 | 1,2,6,7,11,12 |
| Y | JP 2003-187052 A (Nihon Keizai Shimbun, Inc.), 04 July, 2003 (04.07.03), Par. Nos. [0065], [0066] & US 2003/0069822 A1 | 1,2,6,7,11,12 |
| Y | JP 2003-167989 A (Hitachi, Ltd.), 13 June, 2003 (13.06.03), Full text; Figs. 1 to 30 & US 2003/0105695 A1 | 1,2,6,7,11,12 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 03 April, 2006 (03.04.06) | 11 April, 2006 (11.04.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2006/304411

C (Continuation). DOCUMENTS CONSIDERED TO BE RELEVANT

| Category* | Citation of document, with indication, where appropriate, of the relevant passages | Relevant to claim No. |
|---|---|---|
| A | JP 2004-348170 A (Nihon Keizai Shimbun, Inc.),<br>09 December, 2004 (09.12.04),<br>Full text; Figs. 1 to 17<br>& WO 2004/090774 A1 | 1-15 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MASAYUKI MIKAMI.** Weekly Toyo Keizai. TOYO KEIZAI INC, 13 March 2004, 88-94

- Weekly Diamond. DIAMOND, Inc, 02 August 2003, 37-53